(19) **Europäisches Patentamt**

**European Patent Office**

**Office européen des brevets**

(11) **EP 0 987 425 B1**

(12) **EUROPEAN PATENT SPECIFICATION**

(45) Date of publication and mention
of the grant of the patent:
**02.01.2003 Bulletin 2003/01**

(51) Int Cl.⁷: **F02D 41/40**, F02D 35/00

(21) Application number: **99117424.4**

(22) Date of filing: **08.09.1999**

(54) **Control system for diesel engine**

Steuersystem eines Dieselmotors

Système pour la commande d'un moteur diesel

(84) Designated Contracting States:
**DE ES FR GB IT**

(30) Priority: **09.09.1998 JP 25492398**

(43) Date of publication of application:
**22.03.2000 Bulletin 2000/12**

(73) Proprietor: **Mazda Motor Corporation
Aki-gun Hiroshima-ken (JP)**

(72) Inventors:
  • **Saito, Tomoaki, c/o Mazda Motor Corporation
    Aki-gun, Hiroshima (JP)**
  • **Yasutomi, Katsuaki,
    c/o Mazda Motor Corporation
    Aki-gun, Hiroshima (JP)**
  • **Hosoya, Hideki, c/o Mazda Motor Corporation
    Aki-gun, Hiroshima (JP)**
  • **Araki, Keiji, c/o Mazda Motor Corporation
    Aki-gun, Hiroshima (JP)**

(74) Representative: **Müller-Boré & Partner
Patentanwälte
Grafinger Strasse 2
81671 München (DE)**

(56) References cited:
  **EP-A- 0 641 925       US-A- 4 365 605
  US-A- 4 368 705       US-A- 4 596 221**

**Description**

The present invention relates to a control system for an diesel engine equipped with an exhaust gas recirculation system, and, more particularly, to a diesel engine control system for controlling the amount of exhaust gas that is recirculated according to engine operating conditions.

Typically, in order to drop a level of oxides of nitrogen (NOx) emission from a supercharged diesel engine, one type of diesel engine control system, such as described in, for example Japanese Unexamined Patent Publication No. 63- 50544, controls an excess air ratio by regulating the amount of exhaust gas that is recirculated. Such diesel engine control systems controls the amount of exhaust gas that is recirculated by controlling an actuator operated exhaust gas recirculation valve in an exhaust gas recirculation passage according to charging ratios ($\lambda$), i.e. engine operating conditions, which are determined based on pressure and temperature in an intake air passage. One of this type of diesel engine control system, which is known from, for example Japanese Unexamined Patent Publication No. 8- 144867, controls an exhaust gas recirculation valve so as to bring an air excess ratio ($\lambda$) to target values set forth according to engine operating conditions.

Diesel engines are typically operated with a significantly lean fuel and have high combustion temperatures, so as to tend to produce a high level of NOx emission. It is known in the art to control a rise in combustion temperature by increasing the amount of intake air admitted into the intake manifold with an effect of lowering the level of NOx emission into the atmosphere. It is also known that accelerating evaporation and atomization of fuel by raising the temperature of intake air with exhaust gas admitted into the intake manifold decreases an ignition delay time. Reference is made to Figures 31 and 32 for the purpose of providing a background which will enhance an understanding of the relationship between the amount of exhaust gas that is recirculated into the intake manifold and the ignition delay time.

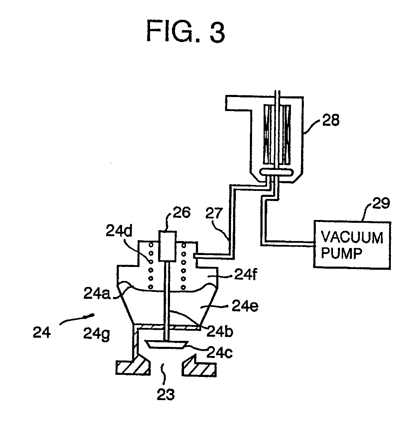

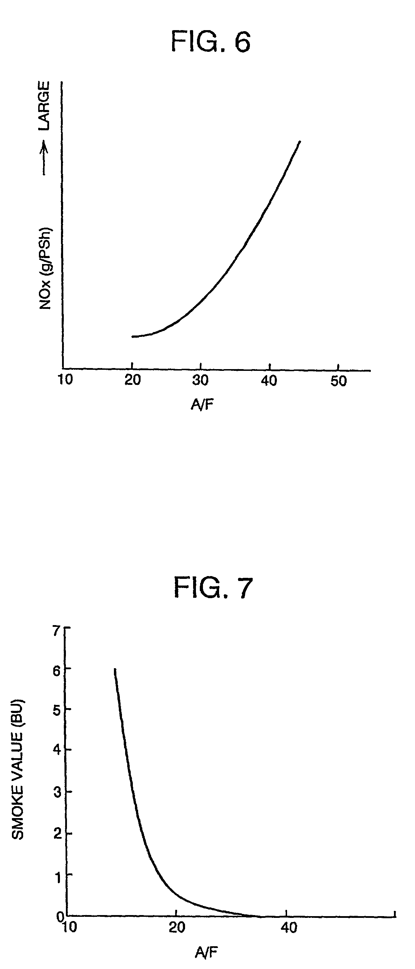

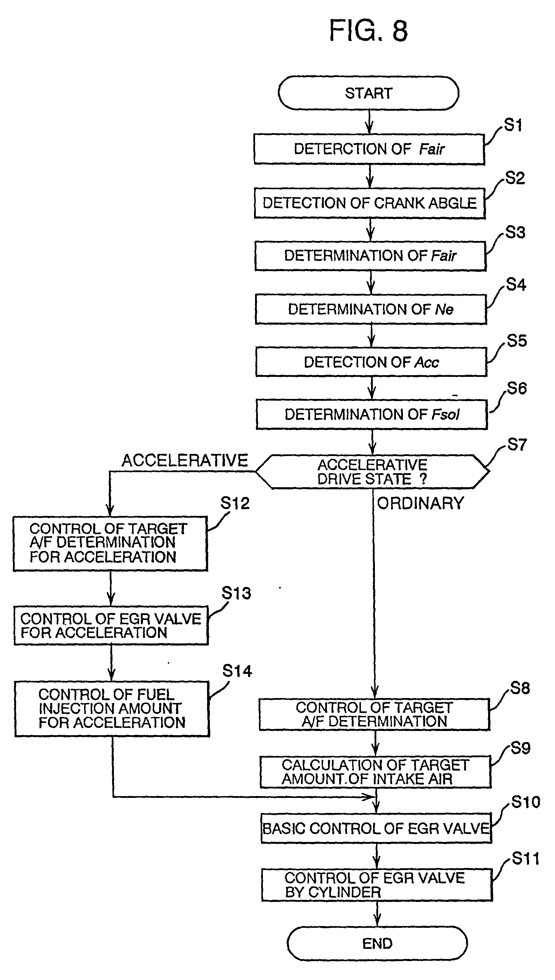

Reference to Figure 3 showing a change in ignition delay time with respect to exhaust gas recirculation rates, when the ratio of exhaust gas admitted into an intake air stream to intake air (which is hereafter referred to as an exhaust gas recirculation ratio) is less than approximately 10 %, the amount of smoke in the exhaust gas is decreased as the amount of exhaust gas that is recirculated increases. On the other hand, the exhaust gas recirculation ratio is over 10 %, the ignition delay time changes rather longer due to a decrease in the amount of oxygen in the intake air, which result in increasing the amount of smoke in the exhaust gas. There is a correlation between ignition delay time and air-to-fuel ratio such as shown in Figure 32. A similar correlation is recognized between the amount of smoke and air-to-fuel ratio (see Figure 7). As seen in Figure 8, That is, there is the specific characteristic that the ignition delay time sharply changes longer with an effect of sharply increasing the amount of smoke as the air-to-fuel ratio becomes rich beyond a certain air-to-fuel ratio. In order to drop the level of NOx emissions and decrease the amount of smoke in the exhaust gas in consideration of the specific characteristic, it is thought preferable to aim at an air-to-fuel ratio as close to but smaller than a critical value as possible to control the amount of exhaust gas that is recirculated.

Since the prior art exhaust gas recirculation control system controls the amount of exhaust gas that is recirculated by the aid of an exhaust gas recirculation valve disposed in an exhaust gas recirculation passage, in the case where control is made to regulate the amount of exhaust gas that is recirculated with the use of a target air-to-fuel ratio as close to one on a rich side as possible, there occurs such a problem that smoke in an exhaust gas sharply increases due to a temporary change in air-to-fuel ratio in excess toward on a rich side at, for example, the beginning of acceleration of the vehicle. That is, at the beginning of acceleration of the vehicle, while the amount of fuel that is injected increases according to a travel of an accelerator pedal, the exhaust gas recirculation valve is forced to close with an effect of decreasing the amount of exhaust gas admitted into an intake air stream so as thereby to increase the amount of intake air introduced into the intake passage. At this time, the air-to-fuel ratio deviates toward a rich side due to a operational delay of the exhaust gas recirculation valve. In particular, in a range of lower engine speeds including engine idling, the exhaust gas recirculation valve is kept to remain fully open in order to provide a sufficient amount of exhaust gas that is admitted. When the accelerator pedal is pushed down under such an engine operating condition, the exhaust gas recirculation valve needs a time to fully close, so that an increase in the amount of smoke occurs in that time becomes a problem.

US 4,596,221 discloses an injection timing control including a control of an exhaust gas recirculation valve. During heavy acceleration of the vehicle the exhaust gas recirculation valve is completely closed. Further, the start of fuel injection is advanced during heavy acceleration. However, such injection timing control cannot reduce both smoke and NO$_x$ during acceleration.

It is the object of the invention to provide a control system for a diesel engine equipped with the feature of controlling the amount of exhaust gas that is recirculated in which both decrease in the amount of smoke and drop in NO$_x$ emission level are realized even during entering an accelerated drive state.

This object is achieved by a control system having the features defined in claim 1. Preferred embodiments are defined in the dependent subclaims.

According to the invention a fuel injection timing is advanced so as to terminate fuel injection earlier even when an increased amount of fuel is injected due to acceleration while the exhaust gas recirculation control is executed.

According to an embodiment of the invention, the control system, adapted to cooperate with a diesel engine equipped with an exhaust gas recirculation valve operative to control an amount of exhaust gas that is partly recirculated from an exhaust passage into an intake passage through an exhaust gas recirculation passage and exhaust gas recirculation control means for feedback controlling a valve lift of the exhaust gas recirculation valve so as to bring the amount of exhaust gas into coincidence with a target amount of exhaust gas which depends upon engine operating conditions, is characterized by fuel injection timing control means for detecting that the diesel engine enters an accelerative drive state and performing advancing control of fuel injection timing so as to terminate fuel injection earlier when having detected that the diesel engine has entered the accelerative drive state while controlling the amount of exhaust gas that is partly recirculated than a point of time immediately before detecting that the diesel engine has entered the accelerative drive state.

With the diesel engine control system, while the diesel engine operates in the ordinary drive state under execution of the exhaust gas recirculation control by means of the exhaust gas recirculation valve, it is determined that the diesel engine has entered the accelerative drive state when the accelerator pedal is pushed down. As a result, the fuel injection timing is advanced so as to terminate fuel injection earlier as compared with a point of time immediately before it is determined that the diesel engine has entered the accelerative drive state. That is, because acceleration of the vehicle is accompanied by an increase in the amount of fuel that is injected in order to increase engine output, the fuel injection timing ordinarily advances according to the increased change in the amount of fuel since a time for which the fuel injector remains open. The diesel engine control system further advances the fuel injection timing so as to terminate fuel injection earlier. Because it is typically necessary to increase the amount of intake air that is introduced into cylinders during acceleration for providing an increase in engine output, the exhaust gas recirculation valve is operated in a closing direction. At this time, the exhaust gas recirculation valve temporarily admits exhaust gas in excess due to a somewhat operational delay thereof, as a result of which the air-to-fuel ratio changes toward a rich side due to both increase in the amount of fuel and increase in the amount of exhaust gas. This causes an apprehension of generation of an increased amount of smoke. However, sharply advancing the fuel injection timing causes a fuel to be sufficiently pre-mixed with air and makes a good progress of evaporation and atomization of the fuel with an effect of restricting generation of smoke due to a rise in combustion temperature, as a result of which the amount of smoke in the exhaust gas is decreased even if the air-to-fuel ratio deviates toward a rich side. In addition, an increase in engine output is provided due to the rise in combustion temperature. On the other hand, although a sharp rise in combustion temperature due to rapid combustion causes a tendency for the diesel engine to push up the level of NOx emissions, an excessive increase in the amount of exhaust gas that is temporarily admitted due to an operational delay of the exhaust gas recirculation valve restricts generation of NOx emissions. In consequence, both decrease in the amount of smoke and drop in NOx emission level are realized even during acceleration.

According to another embodiment of the invention, the diesel engine control system further feedback controls a valve lift of the exhaust gas recirculation valve according to amounts of intake air introduced into the intake passage upstream from a point where the exhaust gas is admitted and amounts of fuel that is injected depending upon accelerator travels so as to bring the air-to-fuel ratio into coincidence with a specified target air-to-fuel ratio.

With the diesel engine control system, the air-to-fuel ratio is, on one hand, controlled with a high precision by controlling the amount of exhaust gas that is recirculated according to an amount of intake air that is actually introduced and an amount of fuel that is injected and on the other hand, accompanied by a deviation due to an operational delay of the exhaust gas recirculation valve at the beginning of acceleration which leads to a relatively great adverse effect on generation of smoke and NOx emissions. In light of these points, the diesel engine control system is significantly effective in lowering generation of smoke.

According to another embodiment of the invention, the diesel engine control system starts the advancing control of fuel injection timing immediately when detecting that the diesel engine has entered the accelerative drive state and advances a fuel injection timing for a predetermined initial period of acceleration, and terminates the advancing control of fuel injection timing, thereafter. The initial period of acceleration accords to a period of time for which the exhaust gas is admitted in excess due to an operational delay of the exhaust gas recirculation valve after the diesel engine has entered the accelerative drive state and is different according to engine operating conditions. Specifically, the initial period of acceleration is equal to approximately two to five combustion cycles for each cylinder and may be determined on the basis of crank angle or cam angle. The diesel engine control system may further terminates the advancing control of fuel injection timing after expiration of the initial period of acceleration since detecting that the diesel engine has entered the accelerative drive state. The initial period of acceleration may be predetermined according to engine operating conditions so as to accord to a period of time for which the exhaust gas is admitted in excess due to an operational delay of the exhaust gas recirculation valve after the diesel engine has entered the accelerative drive state. For example, the initial period of acceleration may be preferable to be approximately several hundreds microseconds when the diesel engine enters an accelerative drive state from an idling state.

With the diesel engine control system, an increase in the amount of smoke is dropped by advancing the fuel injection timing in the initial period of acceleration immediately after the diesel engine has entered the accelerative drive state. On the other hand, when the exhaust gas recirculation valve attains a proper valve lift according to an engine operating condition after expiration of the initial period of acceleration, the fuel injection timing is returned to an ordinary timing, as a result of which a drop in NOx emission level due to the advanced fuel injection timing is prevented.

According to another embodiment of the invention, the diesel engine control system gradually decreases an advance of fuel injection timing according to a lapse of time since detecting that the diesel engine has entered the accelerative drive state so as to accord a decrease in valve lift of the exhaust gas recirculation valve.

In this embodiment, the fuel injection timing is advanced immediately after the diesel engine has entered the accelerative drive state and gradually returned toward a retarding side according to a decrease in deviation of the air-to-fuel ratio until a target air-to-fuel ratio is gradually reached due to a decrease in the amount of admitted exhaust gas which is caused by a delayed closing operation of the exhaust gas recirculation. In consequence, the fuel injection timing is strictly and precisely controlled correspondingly to deviations of the air-to-fuel ratio from a target air-to-fuel ratio, so as to achieve both decrease in the amount of smoke and drop in NOx emission level with a high level.

According to another embodiment of the invention, the diesel engine control system includes an intake throttle valve which is installed in the intake passage upstream from a point where the exhaust gas is admitted and controlled to remain closed by a predetermined amount so as to keep the exhaust gas recirculation valve out of a fully open position while the diesel engine operates in a specified range of lower engine speeds and lower engine loads. That is, in the event where it is impossible to admit a sufficient amount of exhaust gas even while the exhaust gas recirculation valve remains fully open in the range of lower engine speeds and lower engine loads, it is typical to provide a necessary amount of exhaust gas by a rise in pressure difference between intake air and exhaust gas which is caused by throttling the intake throttle valve. However, in the diesel engine control system of this embodiment, the exhaust gas recirculation valve is closed by a little from its fully open position by further rising throttling pressure difference between intake air and exhaust gas by further throttling the intake throttle valve. The advance of fuel injection timing may be increased with a decrease in valve lift of the intake throttle valve.

With the diesel engine control system, the valve lift of the exhaust gas recirculation valve has been already decreased from its full position when entering the accelerative drive state, as a result of which the operational delay of the exhaust gas recirculation valve is decreased, so as to restrict an increase in the amount of smoke. Further, the intake air charging efficiency is lowered with a decrease in valve lift of the intake. This cause a drop in cylinder temperature which leads to an increase in ignition delay, as a result of which there occurs a tendency for the diesel engine to increase smoke. Further, a drop in intake air charging efficiency is accompanied by a tendency for the air-to-fuel ratio to transitionally change toward a rich side. In the diesel engine control system of the embodiment, an increase in the amount of smoke due to an increase in ignition delay and a charge in air-to-fuel ratio toward a rich side is controlled by advancing the fuel injection timing greatly as the intake throttle valve changes its opening smaller.

According to another embodiment of the invention, the diesel engine control system executes the advancing control of fuel injection timing when detecting that the diesel engine has entered the accelerative drive state at least while the diesel engine operates in a specified range of lower engine speeds. It is typical that the intake air charging efficiency has a peak value for a range of middle engine speeds and is dropped as the engine speed drops in the range of middle engine speeds and a lack of intake air becomes greater as the intake air charging efficiency lowers which is accompanied by an easy change in air-to-fuel ratio toward a rich side. Therefore, since an easy increase in the amount of smoke is caused especially when the diesel engine enters the accelerative drive state in a range of lower engine speeds, it provides a significantly effect to control an increase in the amount of smoke by advancing the fuel injection timing. In this embodiment, the diesel engine control system may advance the fuel injection timing by an advance which is greater while the diesel engine operates to accelerate in the specified range of lower engine speeds than while the diesel engine operates to accelerate in a specified range of middle engine speeds. Since the intake air charging efficiency is typically lower in the range of lower engine speeds than in the range of middle engine speeds, the diesel engine receives an insufficient amount of intake air, as a result of which the air-to-fuel ratio tends to change toward a rich side. In other words, the amount of smoke that the diesel engine discharges at the beginning of acceleration depends upon engine operating conditions. In light of this, the diesel engine control system of this embodiment can appropriately control the fuel injection timing correspondingly to a change in intake air charging efficiency by advancing the fuel injection timing by an advance greater in the range of lower engine speeds than in the range of middle engine speeds.

According to another embodiment of the invention, the diesel engine control system determines a target air-to-fuel ratio so as to accord a gradual-to-rapid change in an amount of smoke in an exhaust gas caused by a change in air-to-fuel ratio toward a rich side. In the diesel engine control system, an increase in the amount of smoke is significantly steeped up due to and when the air-to-fuel ratio changes toward a rich side resulting from an operational delay of the exhaust gas recirculation valve at the beginning of acceleration. In such an event, it provides a more significant effect to control an increase in the amount of smoke by advancing the fuel injection timing.

According to another embodiment of the invention, in the diesel engine control system, the amount of fuel injection and the target air-to-fuel ratio are mapped with respect to engine operating conditions, respectively. While both fuel injection timing control and exhaust gas recirculation control are performed with a high precision and good responsiveness by reading these control values from the prepared maps, respectively, On the other hand, an operational delay of the exhaust gas recirculation valve leads to relatively greatly adverse effect on these controls. The diesel engine control system successfully decreases the amount of smoke by advancing the fuel injection timing in the case where an operational delay of the exhaust gas recirculation valve leads to relatively greatly adverse effect on the fuel injection timing control and the exhaust gas recirculation control.

According to still another embodiment of the invention, the diesel engine control system starts the advancing control of fuel injection timing immediately when detecting that the diesel engine has entered the accelerative drive state and terminates the advancing control of fuel injection timing when exhaust gas recirculation valve attains a valve lift smaller than a predetermined valve lift. In this embodiment, the fuel injection timing may be advanced by an advance which is made gradually greater with a decrease in valve lift of the exhaust gas recirculation valve.

With the diesel engine control system, an increase in the amount of smoke is controlled by performing the advancing control of fuel injection timing immediately after the diesel engine has entered the accelerative drive state. On the other hand, when the exhaust gas recirculation valve is subsequently closed with an operational delay to a proper opening corresponding to an engine operating condition, the fuel injection timing is returned to an ordinary timing with an effect of preventing an increase in the amount of smoke due to an advancement of fuel injection timing. Further, the fuel injection timing is advanced immediately after the diesel engine has entered the accelerative drive state and is gradually returned according to a decrease in valve lift of the exhaust gas recirculation valve. In consequence, the fuel injection timing is strictly and precisely controlled correspondingly to deviations of the air-to-fuel ratio from a target air-to-fuel ratio, so as to achieve both decrease in the amount of smoke and a drop in NOx emission level with a high level.

According to a further embodiment of the invention, the diesel engine control system includes an intake throttle valve which is installed in the intake passage upstream from a point where the exhaust gas is admitted and controlled to remain closed by a predetermined amount so that the exhaust gas recirculation control means keeps the exhaust gas recirculation valve out of a fully open position while the diesel engine operates in a specified range of lower engine speeds and lower engine loads. The diesel engine control system feedback controls a valve lift of the exhaust gas recirculation valve according to an amount of intake air introduced into the intake passage upstream from a point where the exhaust gas is admitted and an amount of fuel injection which is determined according to accelerator travels so as to bring an air-to-fuel ratio into coincidence with a specified target air-to-fuel ratio and starts the advancing control of fuel injection timing in which an advance by which a fuel injection timing is advanced is made greater with a decrease in valve lift of the intake throttle valve immediately when detecting that the diesel engine has entered the accelerative drive state and terminates said advancing control of fuel injection timing after continuing the advancing control of fuel injection timing until expiration of a predetermined initial period of acceleration since detecting that the diesel engine has entered the accelerative drive state.

It is typical that the intake air charging efficiency is low in the range of lower engine speeds and is dropped with an increase in an throttled amount of intake air as well. When the intake air charging efficiency is dropped, there occurs a drop in cylinder temperature which leads to an increase in ignition delay, as a result, the diesel engine tends to easily increase smoke. Further, the amount of fuel that is injected is increase so as to provide an increase in engine output at the beginning of acceleration. In consequence, a lack of intake air, in combination with a drop in intake air charging efficiency and an operational delay of the exhaust gas recirculation valve, causes a temporary easy change in air-to-fuel ratio toward a rich side. In other words, an increase in the amount of smoke is caused in particular when the diesel engine operates to accelerate in the range of lower engine speeds. Contrary to this, with the diesel engine control system of this embodiment, both decrease in the amount of smoke and drop in NOx emission level are realized by advancing the fuel injection timing even immediately after the diesel engine has entered the accelerative drive state, which is significantly effective. When the exhaust gas recirculation valve is subsequently closed to a proper opening, the fuel injection timing is returned to an ordinary timing, so that a drop in NOx emission level due to an advancement of fuel injection timing is prevented.

The foregoing and other objects and features of the invention will be clearly understood from the following detailed description regarding preferred embodiments when read in conjunction with the accompanying drawings in which the same reference numerals have been used to denote same or similar parts or mechanisms throughout the drawings and wherein:

Figure 1 is a schematic view showing an overall structure of a diesel engine equipped with a control system of the invention;

Figure 2A is an explanatory view showing a turbine of an turbocharger which has a small A/R ratio;

Figure 2B is an explanatory view showing the turbine of the turbocharger which has a large A/R ratio;

Figure 3 a schematic view of an exhaust gas recirculation valve and its associated drive system;

Figure 4A is a diagram showing the relationship between exhaust gas recirculation valve control negative pressure and control current;

Figure 4B is a diagram showing the relationship between exhaust gas recirculation valve control negative pressure and valve lift;

Figure 5 is block diagram showing the diesel engine control system;

Figure 6 is a diagram showing the relationship between air-to-fuel ratio and NOx emission;

Figure 7 is a diagram showing the relationship between air-to-fuel ratio and smoke value;

Figure 8 is a flow chart illustrating a general sequence routine of exhaust gas recirculation and fuel injection control;

Figure 9 is a diagram showing a change in the amount of intake air with respect to time;

Figures 10A - 10E are a flow chart illustrating details of the sequence routine of exhaust gas recirculation and fuel injection control shown in Figure 9;

Figure 11 is a diagram showing the relationship among a target air-to-fuel ratio for an ordinary drive state, a target air-to-fuel ratio for a shift to an accelerative drive state and a limit air-to-fuel ratio for a shift to the accelerative drive state;

Figures 12A and 12B are a flow chart illustrating a sequence routine of corrective control of intake throttle valve control;

Figure 13 is an illustration showing a map of gain correction factor with respect to intake throttle valve lift and engine speed;

Figure 14 is an illustration showing a map of intake throttle valve lift with respect to the amount of fuel injection and engine speed;

Figures 15A and 15B are a flow chart illustrating a sequence routine of fuel injection timing setting control;

Figure 16 is an illustration showing a map of basic fuel injection timing with respect to the amount of fuel injection and engine speed;

Figure 17 is an illustration showing a map of advance value for fuel injection timing with respect to intake throttle valve lift and engine speed;

Figure 18A is a time chart of a change in accelerator travel during a shift to an accelerative drive state from lower speed-lower load drive state;

Figure 18B is a time chart of a change in the amount of fuel injection during a shift to an accelerative drive state from lower speed-lower load drive state;

Figure 18C is a time chart of a change in engine speed during a shift to an accelerative drive state from lower speed-lower load drive state;

Figure 18D is a time chart of a change in basic fuel injection timing during a shift to an accelerative drive state from lower speed-lower load drive state;

Figure 18E is a time chart of a change in corrective advance during a shift to an accelerative drive state from lower speed-lower load drive state;

Figure 18F is a time chart of a change in fuel injection timing during a shift to an accelerative drive state from lower speed-lower load drive state;

Figure 18G is a time chart of a change in exhaust gas recirculation valve lift during a shift to an accelerative drive state from lower speed-lower load drive state;

Figure 19A is a time chart of a time interval for which an injector remains open in an ordinary drive state;

Figure 19B is a time chart of a time interval for which an injector remains open during acceleration;

Figure 19C is a time chart of a time interval for which an injector remains open immediately after a shift to an accelerative drive state from an ordinary drive state;

Figure 20 is a diagram showing a change in charging efficiency with respect to engine speed;

Figure 21 is a diagram showing cylinder compression temperature with respect to a change in crank angle;

Figure 22 is a diagram showing cylinder pressure and ignition delay time with respect to a change in crank angle;

Figure 23, which corresponds to Figure 15B, is a flow chart illustrating a variation of the sequence routine of fuel injection timing setting control shown in Figures 15A and 15B;

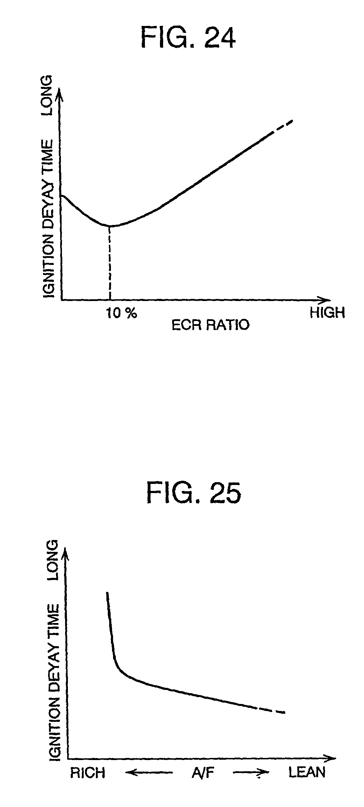

Figure 24 is a diagram showing ignition delay time with respect to a change in exhaust gas recirculation rate; and

Figure 25 is a diagram showing ignition delay time with respect to a change in A/F ratio.

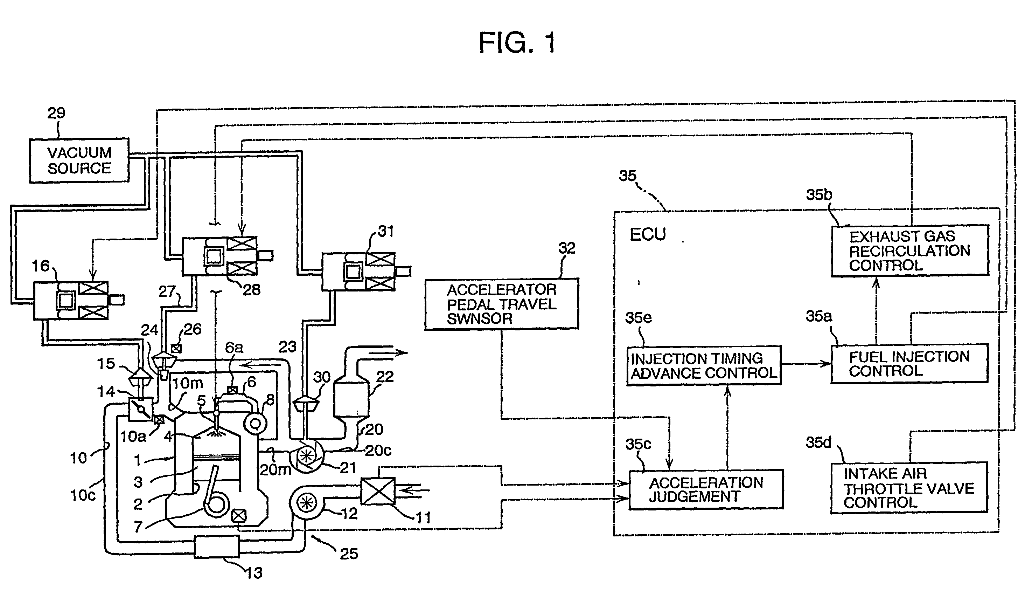

Referring to the drawings in detail and, more particularly, to Figure 1 which shows an overall system of diesel engine control according to an embodiment of the invention, a diesel engine 1 of a type having four cylinders 2 (only one of which is shown) arranged in a straight line is installed to a vehicle equipped with a manual transmission (not shown). A combustion chamber 4 is formed in the cylinder 2 by the top of a piston 3. The diesel engine 1 is equipped with a common-rail injection system including a common-rail to which injectors 5 such as electromagnetic valves are connected. Each injector 5 is controlled to directly spray fuel into the combustion chamber 4 at a specified timing. The common-rail 6 is provided with a high pressure delivery pump 8 which is driven by a crankshaft 7 and a pressure sensor 6a operative to monitor fuel pressure (common-rail pressure). The high pressure pump 8 operates so as to maintain the common-rail pressure at a specified level which is, for example, 40 MPa during idling and 80 MPa during other engine operation. An angle sensor 9 is provided at an end of the crankshaft 7 to monitor an angle of rotation of the crankshaft 7. Specifically, the angle sensor 9 comprises a disk which is formed with peripheral projections or notches arranged at regular angular intervals and an electromagnetic pick-up positioned so as to be opened by the notches or interrupted by the projections. The angle sensor 9 generates one pulse every time that the electromagnetic pick-up is opened or interrupted, i.e. every regular angular rotation of the crankshaft 7.

Air is introduced into the cylinder 2 through an intake passage 10 comprising a common pipe 10c having a surge tank at its downstream end and an intake manifold 10m through which the respective cylinders 4 are connected to the common intake pipe 10c via the surge tank. The intake passage 10 is equipped with an air cleaner (not shown), an air flow sensor 11, a blower 12, an intercooler 13 and an intake air throttle valve 14 in order from the upstream end of the common pipe 10c. The blower 12 is driven by a turbine 21 which will be described later to assist the vacuum by raising the pressure of incoming air. A pressure sensor 10a is provided to monitor the pressure of intake air in the surge tank. The intake throttle valve 14 comprises as a butterfly valve which is formed with a notch so as to admit intake air to flow therethrough even while it is fully closed and is controlled in valve lift or opening by regulating the vacuum acting on a diaphragm 15 through a vacuum control electromagnetic valve 16. The air flow sensor 11, which is of a constant-temperature hot-film type, comprises a heater arranged perpendicularly to a direction of the intake air stream and hot films disposed on opposite sides of the heater and monitors a forward intake air flow from the upstream side to the downstream side and an intake air back flow toward the upstream side, respectively, on the basis of fluctuations in film temperature. The amount of intake air flow is accurately metered on the basis of these forward flow and back flow, which prevents controlling the amount of exhaust gas to be recirculated from causing an error. The air flow sensor 11 may be replaced with a pressure sensor that monitors the pressure of intake air in the common intake pipe 10c upstream from the blower 12. Exhaust gas is discharged through an exhaust passage 20 comprising an exhaust manifold 20m connected to the respective cylinders 2 and a common exhaust pipe 20c which is equipped, in order from the upstream side, with a turbine 21 which is driven by exhaust gas and dives the blower 12 and a four-way catalytic converter 22 operative to purify hydrocarbons (HC), carbon monoxide (CO), oxides of nitrogen (NOx) and particulate. A variable geometry turbocharger (VGT) 25, which is comprised of the blower 12 and the turbine 21, forces intake air, under pressure, into the cylinder 2 during accelerative driving or during driving under high engine loads.

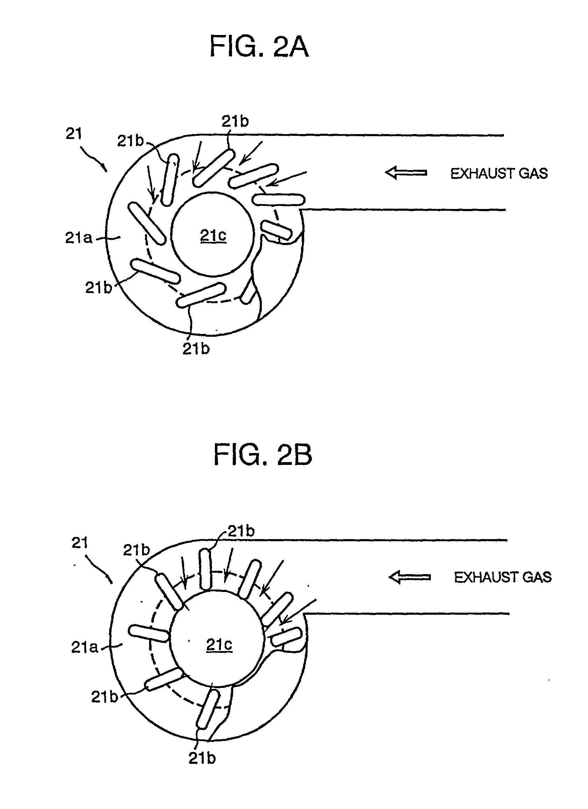

Referring to Figures 2A and 2B showing the turbine 21, a turbine rotor 21c with a number of movable turbine blades 21b arranged at regular angular intervals is installed in a turbine casing 21a. These movable turbine blades 21b are moves to change their angles with respect to a direction of rotation of the turbine rotor which is referred to as turbine blade angles. A turbine nozzle cross action which governs what is called an A/R ratio depends upon the turbine blade angle. That is, the turbine blade angle is a measurement of how high the A/R ratio of the turbine has - the greater the turbine blade angle, the higher the A/R ratio. While the turbine blade angle is kept small as shown in Figure 2A to provide a low A/R ratio, the supercharging efficiency is increased in a range of lower engine speeds where the amount of exhaust gas flow is small. Contrary to this, while the turbine blade angle is kept large as shown in Figure 2B to provide a high A/R ratio, the supercharging efficiency is lowered in the range of lower engine speeds.

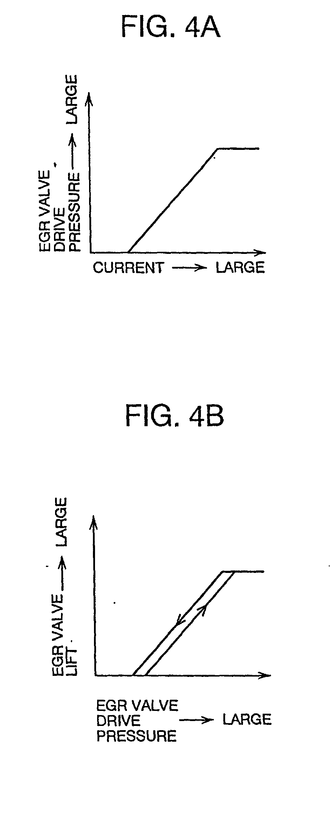

Referring back to Figure 1, an exhaust gas recirculation or EGR passage 23 through which exhaust gas is partly recirculated into an intake air stream is connected between the common exhaust pipe 20c upstream from the turbine 21 and the intake manifold 10m downstream far from the intercooler 13. The exhaust gas recirculation passage 23 is provided with a vacuum operated, diaphragm type of exhaust gas recirculation or exhaust gas recirculation valve 24 to admit partly exhaust gas into the intake air stream. The valve lift or opening of exhaust gas recirculation valve 24 is variable so as to vary an exhaust gas recirculation rate. As shown in detail in Figure 3, the exhaust gas recirculation valve 24 comprises a valve box 24e, a diaphragm 24a by which the valve box 24e is divided into upper or negative and lower pressure chambers 24f and 24g, a valve stem 24b which is fixedly installed to the diaphragm 24a and fixedly provided at opposit ends with a valve body 24c and a valve lift or opening sensor 26, and a coil spring 24d forcing the valve body 24c in a direction in which it closes the Exhaust gas recirculation passage 23. The valve body 24c moves up or down so as to linearly change an aperture size of the Exhaust gas recirculation passage 23. The upper pressure chamber (vacuum chamber) 24f is connected to a vacuum control electromagnetic valve 28 for vacuum control through a vacuum passage 27. A vacuum pump 29 as a vacuum source is connected to the electromagnetic valve 28. An electronic control unit (ECU) 35, which will be described later, provides a control signal or control current with which the electromagnetic valve 28 is operated to open or shut the vacuum passage 27. Opening and shutting the vacuum passage 27 regulates the vacuum as exhaust gas recirculation valve driving force in the upper pressure chamber 24f of the exhaust gas recirculation valve 24, so as thereby to linearly change the aperture size of the Exhaust gas recirculation passage 23. Specifically, as shown in Figure 4A, the Exhaust gas recirculation valve driving vacuum in the upper pressure chamber 24f is increasingly changed, in other words, the pressure in the upper pressure chamber 24f is dropped, as the control current increases. As shown in Figure 4B, the valve lift of the valve body 24c increases and decreases in proportion to a change in Exhaust gas recirculation valve driving vacuum. The change in valve lift has a hysteresis between a rise and a drop in Exhaust gas recirculation valve driving vacuum. A valve 30 of the same type as exhaust gas recirculation valve 24 is incorporated to the turbine 21 of the turbosupercharger 25 to regulate the vacuum acting on a diaphragm of the valve 30 through an electromagnetic valve 31 so as thereby to adjust the turbine blade angle.

As schematically shown in Figure 1, the electronic control unit (ECU) 35 is conceptually divided into several functional means including fuel injection control means 35a, an exhaust gas recirculation control means 35b, acceleration detection means 35c, intake throttle valve control means 35d and injection advance control means 35e. The electronic control unit (ECU) 35 receives signals from various sensors including the pressure sensor 6a, the angle sensor 9, the air flow sensor 11a, the lift sensor 26 and a accelerator travel sensor 32 which detects a travel of an accelerator pedal (not shown) and provides control signals with which the injector 5, the high pressure pimp 8, the intake throttle valve 14, exhaust gas recirculation valve 24, the turbine 21 and the like are operated and controlled, respectively.

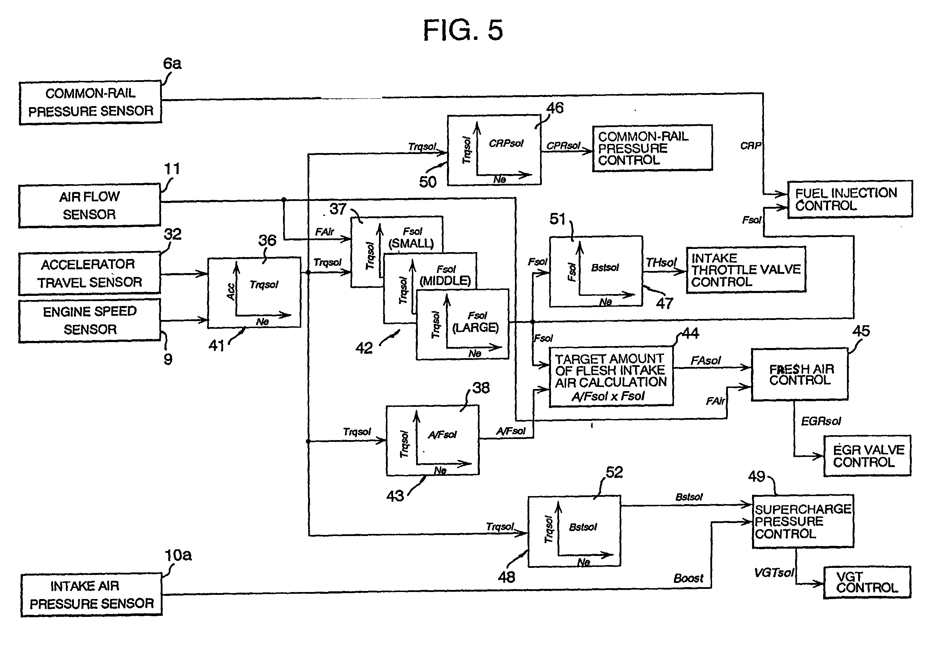

Figure 5 is a schematic functional block diagram illustrating the electronic control unit (ECU) 35 which performs fuel injection control, exhaust gas recirculation control, common-rail pressure control and variable geometry turbocharger (VGT) control. The respective control will be described more fully below.

In both control, a basic amount of fuel injection is determined and A/F ratios for the respective cylinders 2 are controlled to become equal and precise by regulating an exhaust gas recirculation (EGR) rate by the aid of the exhaust gas recirculation valve 24. The Exhaust gas recirculation rate is defined as a rate of the amount of exhaust gas recirculation to the total amount of exhaust gas and is given by the following expression:

$$\text{EGR rate} = \text{the amount of exhaust gas recirculation/the total amount of exhaust gas}$$

Since the distribution of exhaust gas that is admitted into the intake passage 10 is uneven among the cylinders 2 and, in addition, the air intake characteristics are different among the cylinders 2, variations in Exhaust gas recirculation rate and-the amount of intake air among the cylinders occur even at same valve lifts of the exhaust gas recirculation valve 24. Cylinders 2 which have high Exhaust gas recirculation rates are supplied with small amounts of intake air, and cylinders which have low Exhaust gas recirculation rates are supplied with large amounts of intake air. Therefore, basically, a target air-to-fuel ratio that is common to all of the cylinders 2 is established, and the amount of exhaust gas recirculation is controlled by cylinder so as to deliver the target air-to-fuel ratio into a cylinder for the amount of intake air introduced into the cylinder. In other words, equalization and precision of A/F ratios for the respective cylinders 2 is accomplished not by equalizing proportions of recirculating exhaust gas relative to amounts of intake air introduced into the respective cylinders 2 but by controlling the amount of exhaust gas for each cylinder 2 so as to deliver the target A/F ratio. More specifically, the electronic control unit (ECU) 35 has various maps including a two dimensional map 36 in which optimum target engine output torque (which is hereafter referred to as a target engine torque for simplicity) *Trqsol* is experimentally determined with respect to a change in acceleration pedal travel *Acc* and a change in engine speed *Ne*, a three dimensional map 37 in which an optimum target amount of fuel injection *Fsol* is experimentally determined with respect to a change in engine speed *Ne*, a change in target engine torque *Trqsol* and a change in the amount of fresh intake air *Fair* excluding fuel and a two dimensional map 38 in which an optimum target air-to-fuel ratio *A*/*Fsol* is experimentally determined with respect to a change in engine speed *Ne* and a change in target engine torque *Trqsol* electronically stored in its memory. The target air-to-fuel ratio *A*/*Fsol* is employed as a standard air-to-fuel ratio based on which the amount of exhaust gas recirculation necessary to drop a NOx emissions level and a decrease the amount of smoke is determined. As seen in Figure 6 which shows the relationship between air-to-fuel ratio of the diesel engine 1 and the level of NOx emission in the exhaust gas from the diesel engine 1, there is a tendency for NOx to provide an increase in amount with an increase in A/F ratio. In light of this, generation of NOx is controlled by lowering the air-to-fuel ratio (enriching a fuel mixture) by the aid of an increased amount of exhaust gas. However, as seen in Figure 7 which shows the relationship between air-to-fuel ratio and smoke value of an exhaust gas, the amount of smoke sharply increases when the air-to-fuel ratio drops beyond a critical point. This indicates that there is a limit to which the amount of exhaust gas to be recirculated is increased. Therefore, in order to realize both drop in NOx emission level and restraint of an increase in the amount of smoke, it is essential to determine a target air-to-fuel ratio for controlling the amount of exhaust gas recirculation as small as possible so as to provide a drop in NOx emission level and as close to but smaller than the critical point as possible.

In this embodiment, a target engine torque *Trqsol* is determined on the basis of an accelerator travel *Acc* which is detected by the accelerator travel sensor 32 and an engine speed *Ne* which is detected by the angle sensor 9 with reference to the target engine torque map 36 in a functional block 41 for target engine torque determination. Subsequently, a target amount of fuel injection *Fsol* is determined on the basis the engine speed *Ne*, the target engine torque *Trqsol* and an amount of fresh intake air *Fair* which is detected by the air flow sensor 11 with reference to the target amount of fuel injection map 37 in a functional block 42 for determination of the target amount of fuel injection. On the other hand, a target air-to-fuel ratio *A*/*Fsol* is determined based on the engine speed *Ne* and the target engine torque *Trqsol* with reference the target air-to-fuel ratio map 38 in a functional block 43 for target air-to-fuel ratio determination. A target amount of fresh intake air *Fair,* which is used to perform feed-back control of fresh intake air in a functional block 45, is calculated by multiplying the target amount of fuel injection *Fsol* by the target air-to-fuel ratio *A/Fsol* in a functional block 44 for target air-to-fuel ratio calculation. This feed-back control do not control directly the amount of fresh intake air itself but controls the amount of exhaust gas recirculation so as to provide a change in proportion of intake air. Specifically, the exhaust gas recirculation valve 24 is controlled according to a target amount of valve control *KTegr* which is determined in place of a correction value for the amount of fresh intake air. These target air-to-fuel ratio calculation block 44 and fresh intake air feed-back control block 45 form the exhaust gas recirculation control means 35b in Figure 1.

The electronic control unit (ECU) 35 further has a two dimensional map 50 in which an optimum common-rail pressure *CRPsol* is experimentally determined with respect to changes in target engine torque *Trqsol* and engine speed *Ne* electronically stored in the memory. A target common-rail pressure *CRPsol* is determined based on the engine speed *Ne* and the target engine torque *Trqsol,* which is determined in the target engine torque determination block 41, with reference the common-rail pressure map 50 in a functional block 46 for common-rail pressure determination and used to control a common-rail pressure *CRP*. An energization time interval for which the injector 5 is kept open is determined based on the controlled common-rail pressure *CRP* and the target amount of fuel injection *Fsol* determined in block 42 for determination of the target amount of fuel injection which forms the fuel injection control means 35a.

The electronic control unit (ECU) 35 further has a two dimensional map 51 in which an optimum target throttling amount of intake throttle valve *THsol* is experimentally determined with respect to a change in the target amount of fuel injection *Fsol* and engine speed *Ne* electronically stored in the memory. A target throttling amount of intake throttle valve *THsol* is determined based on the engine speed *Ne* and the target amount of fuel injection *Fsol,* which is determined in block 42 for determination of the target amount of fuel injection, with reference the map 51 of target throttling amount of intake throttle valve in a functional block 47 for determination of a target throttling amount of intake throttle valve and used to control a throttling amount of intake throttle valve *TH*. The determination block 47 for determination of a target throttling amount of intake throttle valve *THsol* forms the fuel injection control means 35a.

The electronic control unit (ECU) 35 further has a two dimensional map 52 in which an optimum boost pressure *Boostsol* is experimentally determined with respect to changes in target engine torque *Trqsol* and engine speed *Ne* electronically stored in the memory. A target boost pressure *Boostsol* is determined based on the engine speed *Ne* and the target engine torque *Trqsol,* which is determined in the target engine torque determination block 41, with reference the target boost pressure map 52 in a functional block 48 for target boost pressure determination and used together with an intake air pressure *Boost* in the surge tank which is detected by the pressure sensor 10a to determine a turbine blade angle *VGTsol* of the turbine blades 21b of the turbine 21 for the target boost pressure *Boostsol*. The variable geometry turbocharger (VGT) 25 is controlled so that the intake air pressure *Boost* reaches the target boost pressure *Boostsol.*

Figure 8 is a flow chart illustrating a general sequence routine of exhaust gas recirculation valve control performed by the electronic control unit (ECU) 35. When the sequence logic commences and control proceeds directly to a block at S1 where an amount of intake air is detected by the air flow sensor 11 and then to a block at step S2 where a rotational angle of the crankshaft 7 is detected by the angle sensor 9. Control parameters are calculated and determined at steps S3 through S6. Specifically, an amount of fresh intake air *Fair* for each cylinder 2 is calculated on the basis of the amount of intake air and the rotational angle of the crankshaft 7 at step S3, and an engine speed *Ne* is determined according to the rotational angle of the crankshaft 7 at step S4. Further, at step S6, a target amount of fuel injection *Fsol* is calculated on the basis of an accelerator travel *Acc* which is detected by the accelerator travel sensor 32 at step S5 and the amount of fresh intake air *Fair.* Subsequently, a judgement is made on the basis of the accelerator travel *Acc* and the amount of fresh intake air *Fair* at step S7 as to drive states, namely whether the diesel engine 1 has shifted to an accelerative drive state where the diesel engine 1 operates with higher loads or stays in an ordinary drive state where the diesel engine 1 operates with lower or middle loads. In the ordinary driving state, a basic target air-to-fuel ratio is determined at step S9, and then a target amount of fresh intake air is determined based on the basic target air-to-fuel ratio at step S9. Subsequently, basic control of the exhaust gas recirculation valve 24 is performed at step S10, and then correction control of the exhaust gas recirculation valve 24 is performed according to the amount of fresh intake air *Fair* for each cylinder 2 at step S11. On the other hand, in the accelerative driving state, after determining a target air-to-fuel ratio for acceleration at step S12, control of the exhaust gas recirculation valve 24 for acceleration is performed at step S13, and then control of the injector 5 is subsequently performed at step S14.

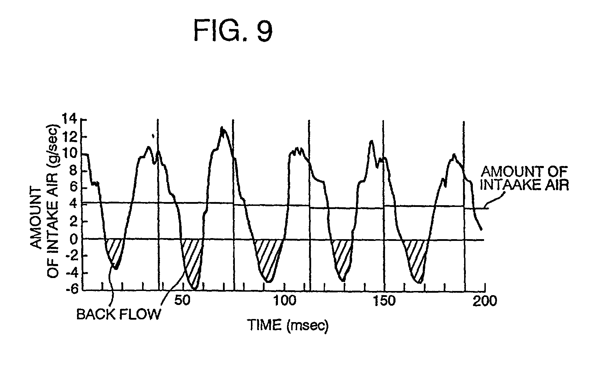

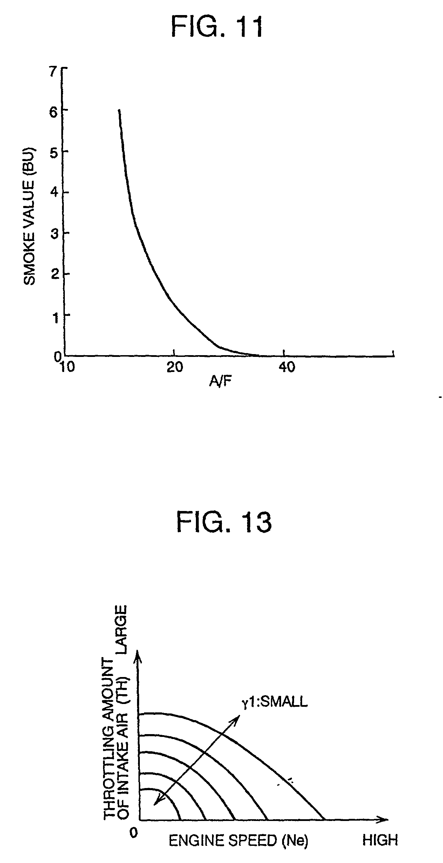

Figure 9 shows a change of the amount of intake air which is detected by the air flow sensor 11 with the passage of time. A shaded part indicates a back flow of intake air. The amount of intake air that is actually introduced into each cylinder 2 is given as an integrated value of the reminder in quantity between a forward flow and a back flow. It is clearly perceived that the actually introduced amount of intake air slightly fluctuates.

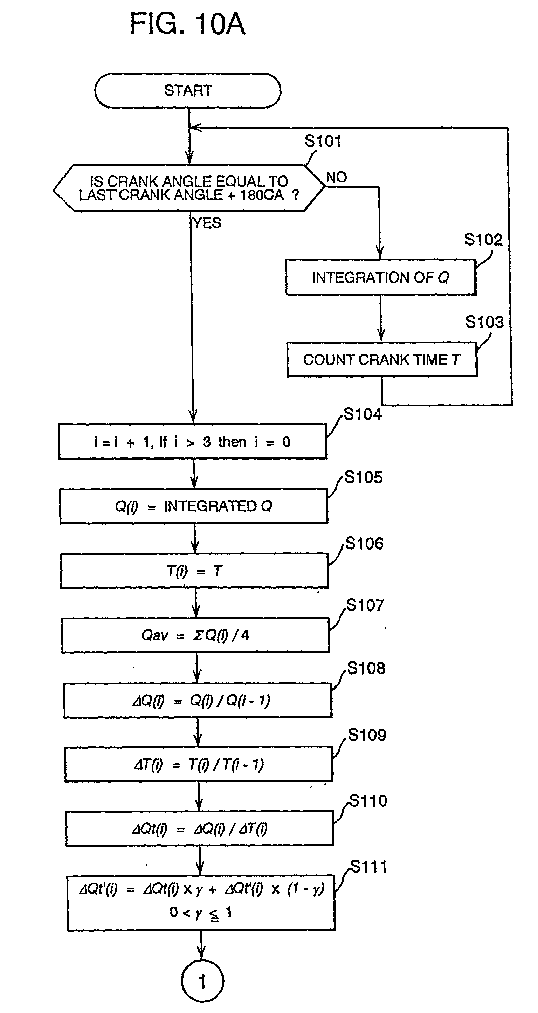

Figures 10A through 10E is a flow chart illustrating a sequence routine of exhaust gas recirculation valve control.

Referring to Figure 10A which is a part of the exhaust gas recirculation valve control sequence routine for calculation of the amount of fresh intake air *Fair* for each cylinder 2 on the basis of an amount of intake air detected by the air flow sensor 11 and a rotational angle of the crankshaft 7 detected by the angle sensor 9 which is performed at step S3 in the general routine of exhaust gas recirculation valve shown in Figure 8, when the sequence logic commences, measurements are made to find an integrated amount of intake air *Q* and a passed time *T.* At step S101, a judgement is made as to whether the crankshaft 7 has turned through 180°. The measurements of the integrated amount of intake air and time are repeatedly made at step S102 and S103, respectively, until the crankshaft 7 turns through 180°. Every time the crankshaft 7 turns through 180°, the cylinder number *i* is changed by an increment of one at step S104. If the changed cylinder number *i* is beyond three, then it is changed to zero in the case where cylinders of the four-cylinder diesel engine 1 are numbered zero, one, two and three, respectively. The integrated amount of intake air *Q* which is introduced into a specific cylinder 2 during the 180° turn of the crankshaft 7 is taken as an amount of intake air *Q(i)* for the specific cylinder 2 of cylinder number *i* at step S105, and the time *T* counted during the 180° turn of the crankshaft 7 is taken as a crank interval *T(i)* for the specific cylinder 2*(i)* at step S106. At step S107, an average amount of intake air for the four cylinders is calculated as a basic amount of intake air *Qav*. Thereafter, calculations are made to determine a quantitative change rate of intake air $\Delta Q(i)$ (which is referred to as an intake air change rate) and a change rate of crank interval $\Delta T(i)$ (which is referred to as a crank interval change rate) for the specific cylinder 2*(i)* with respect to the amount of intake air *Q(i-1)* and the crank interval *T(i-1)* for the cylinder 2*(i-1)* whose intake stroke is directly prior to that of the specific cylinder 2*(i)* at steps S108 and S109, respectively. A ratio of the amount of intake air *Q(i)* relative to the crank interval change rate $\Delta T(i)$, which indicates the amount of intake air *Q(i)* tempered with the crank interval change rate $\Delta T(i)$, is calculated as an intake air change index *Qt(i)* at step S110. Tempering the amount of intake air *Q(i)* with the crank interval change rate $\Delta T(i)$, which is intended to decrease disturbance due to fluctuations in engine torque or in angular velocity of the crankshaft 7 as small as possible, proves effective during engine idling which causes significant fluctuations in engine output torque. A quantitative intake air characteristic *Qt'(i)* for the specific cylinder 2*(i)* is determined based on the intake air change index $\Delta Qt'(i)$ at steps S111. The quantitative intake air characteristic $\Delta Qt'(i)$ is given by the following expression:

$$\Delta Qt'(i) = \Delta Qt(i) \times r + \Delta Qt(i)' \times (1 - r)$$

Where *r* is the constant which is greater than *0* but equal to or less than 1; and

$\Delta Qt(i)'$ is the intake air change index obtained in the previous cycle of the sequential routine.

The quantitative intake air characteristic $\Delta Qt(i)$ is given by reflecting a specified proportion of the previous intake air change index on the current intake air change index. Accordingly, individual differences of the quantitative intake air characteristic $\Delta Qt(i)$ are gradually made distinct.

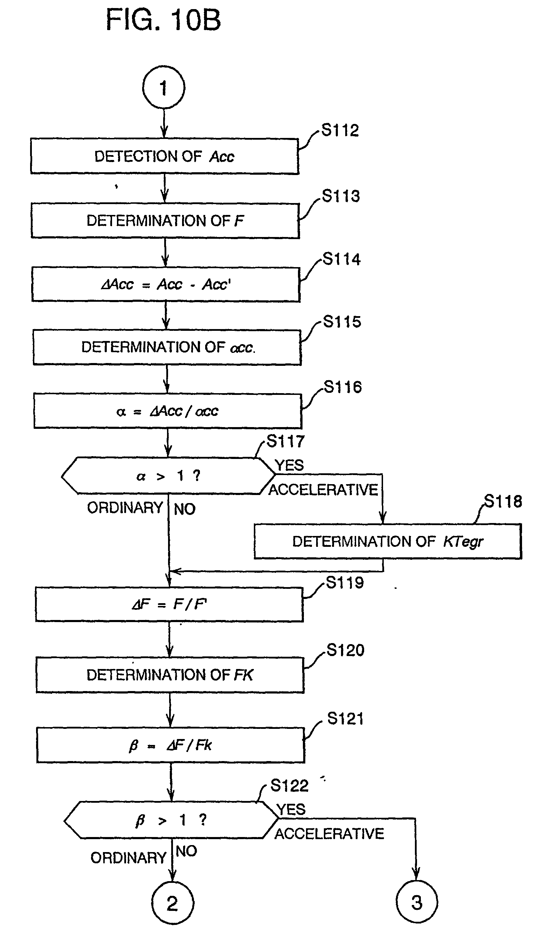

Referring to Figure 10B which is a part of the exhaust gas recirculation valve control sequence routine for drive state judgement made at step S7 in the general routine of exhaust gas recirculation valve control shown in Figure 8, because there is a demand for an increase in the amount of intake air according to an increase in the amount of fuel injection while the diesel engine 1 is in the ordinary drive state , the exhaust gas recirculation valve 24 is necessarily closed to decrease the amount of exhaust gas that is recirculated into the intake air stream. For this reason, the drive state judgement is made in order to perform the exhaust gas decreasing control for the exhaust gas recirculation valve 24 and made on the basis of a change in accelerator travel *Acc* and a change in the amount of fuel injection.

When the sequence logic commences, after determining a target engine torque *Trqsol* on the basis of an accelerator travel *Acc* and an engine speed *Ne* at step S112, a target amount of fuel injection *Fsol* is calculated on the basis of the target engine torque *Trqsol,* the engine speed *Ne* and a basic amount of intake air *Qav* at step S113. Subsequently, after calculating a change in accelerator travel (an accelerator travel change) $\Delta Acc$ of the current accelerator travel *Acc* from the last accelerator travel *Acc'* at step S114, an accelerator travel $\alpha cc$ for judgement of a shift to the accelerative drive state is determined with reference to a map (not shown) electronically stored in the memory which defines an accelerator travel for judgement of a shift to the accelerative drive state with respect to an amount of fuel injection *F* (a target amount of fuel injection *Fsol*) and an engine speed *Ne* at step S115. The accelerator travel $\alpha cc$ is experimentally determined such as, on one hand, to become greater with an increase in engine speed *Ne* so that determination of a shift to the accelerative drive state is hard to occur and, on the other hand, to become smaller with an increase in the target amount of fuel injection *Fsol* so that determination of a shift to the accelerative drive state is easy to occur. Since the amount of exhaust gas recirculation is great by nature while the diesel engine 1 operates with low engine loads, the accelerator travel $\alpha cc$ is made smaller with an increase in the amount of fuel injection so that the exhaust gas decreasing control is quickly caused when an increasing change in accelerator travel (an increasing change in the amount of fuel injection) is great. After calculating an acceleration coefficient $\alpha$ which is given by dividing the accelerator travel change $\Delta Acc$ by the accelerator travel $\alpha cc$ at step S116, a judgement is made at step S117 as to whether the acceleration coefficient α is greater than one. When the acceleration coefficient α is greater than one, it is judged that the diesel engine 1 has shifted to the accelerative drive state , then, a target amount of exhaust gas recirculation valve control *KTegr* is determined with reference to a map (not shown) electronically stored in the memory which defines an amount of exhaust gas recirculation valve control with respect to an acceleration coefficient α and a target air-to-fuel ratio *A/Fsol* at step S118. In the event where an acceleration coefficient α is greater than one, the amount of exhaust gas recirculation is rapidly decreased for the reason that the driver's demand for acceleration is given priority over a drop in NOx emission level which is caused by exhaust gas recirculation. Therefore, the target amount of exhaust gas recirculation valve control *KTegr* is experimentally determined in the exhaust gas recirculation valve control map such that valve opening becomes smaller with an increase in acceleration coefficient α. In the drive state judgement which is made on the basis of an accelerator travel *Acc*, the target amount of exhaust gas recirculation valve control *KTegr* is, so to speak, expectantly determined according to a result of the drive state judgement. On the other hand, the judgement made on the basis of an amount of fuel injection is performed for the purpose of controlling fuel injection in compliance with an actual engine demand for acceleration which is verified based on the amount of fuel injection as described below.

When the acceleration coefficient α is smaller than one st step S117 or after determining the target amount of exhaust gas recirculation valve control *KTegr* at step S118, a quantitative change rate of fuel injection *ΔF* is calculated on the basis of the current amount of fuel injection *F* and the last amount of fuel injection *F'* at step S119. Subsequently, at step S120, a judging amount of fuel injection *Fk* is determined with reference to a map (not shown) electronically stored in the memory which defines a judging amount of fuel injection for judgement of a shift to the accelerative drive state with respect to an amount of fuel injection *F* and an engine speed *Ne.* After calculating a fuel injection amount change coefficient β which is given by dividing the quantitative fuel injection change rate *ΔF* by the judging amount of fuel injection *Fk* at step S121, a judgement is made at step S122 as to whether the fuel injection amount change coefficient β is greater than one. It is judged that the diesel engine 1 still stays in the ordinary drive state when the fuel injection amount change coefficient β is smaller than one, or it is judged that the diesel engine 1 has shifted to the accelerative drive state when the fuel injection amount change coefficient β is greater than one.

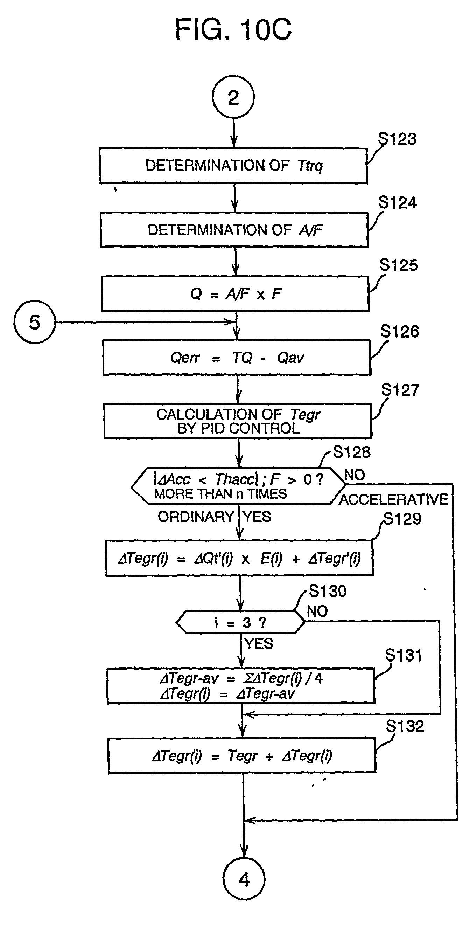

Referring to Figure 10C which is a part of the sequence routine of exhaust gas recirculation valve control for calculation of a valve lift of the exhaust gas recirculation valve which is performed when the diesel engine 1 is in the ordinary drive state , after determining a target engine torque *Trqsol* on the basis of the accelerator travel *Acc* and the engine speed *Ne* with reference to the target engine torque map 36 at step S123 and a target air-to-fuel ratio *A/Fsol* on the basis of the target engine torque *Trqsol* and the engine speed *Ne* with reference to the target air-to-fuel ratio map 38 at step S124, a target amount of intake air *TQ* is calculated on the basis of the target air-to-fuel ratio *A/Fsol* and a target amount of fuel injection *Fsol* at step S125. After calculating a deviation *Qerr* of the target amount of intake air *TQ* from the basic amount of intake air *Qav* at step S126, a basic amount of exhaust gas recirculation valve control *Tegr* which makes the intake air amount deviation *Qerr* zero is determined by PID control at step S127. For example, the basic amount of exhaust gas recirculation valve control *Tegr* is determined by adding up a proportional control term which is given by multiplying the intake air amount deviation *Qerr* by a proportional control gain (P gain), an integral control term which is given by multiplying an integrated value of the intake air amount deviation *Qerr* by an integration control gain (I gain) and a differential control term which is given by multiplying a differentiated value of the intake air amount deviation *Qerr* by a differential control gain (D gain) together. These P, I and D gains are determined by multiplying basic gains by a gain factor *K*, respectively. The gain factor *K* is increasingly or decreasingly changed so as to vary the responsiveness and the convergency of the PID control.

The air-to-fuel ratio at which both drop in NOx emission level and decrease in smoke are realized is different little by little according to engine speeds *Ne* and engine torque *Ttrq* (i.e. an amount of fuel injection *F*). In particular, because air and fuel are favorably premixed in the combustion chamber 4 with an effect of decreasing the amount of unburnt fuel in a range of engine operating conditions where a sufficient amount of exhaust gas is recirculated by the variable geometry turbocharger (VGT) 25, the target air-to-fuel ratio can be set to be lower in a supercharging range on a side of higher engine speeds than in a non-supercharging range on a side of lower engine speeds, which is contributory to a drop in level of NOx emission. Accordingly, a judgement is made at step S128 as to a condition of the determination of ordinary drive state that an absolute value of the accelerator travel change *ΔAcc* remains greater than a threshold accelerator travel *Thacc* for a predetermined times *n* of consecutive cycles and, at the same time, fuel is injected. This judgement is made for the purpose of improvement of emission control during idling and during ordinary drive after idling. In a range of fuel injection cut (*F* = 0) during deceleration, the exhaust gas recirculation valve 24 is closed to interrupt exhaust gas recirculation.

When the condition of ordinary drive state is satisfied, a corrective amount of exhaust gas recirculation valve control *ΔTegr* for each cylinder 2*(i)* is calculated from the following expression at step S129:

$$\Delta Tegr = \Delta Qt'(i) \times E(i) + \Delta Tegr'(i)$$

where $\Delta Qt'(i)$ is the last quantitative intake air characteristic;

$E(i)$ is the corrective gain; and

$\Delta Tegr'(i)$ is the last corrective amount of exhaust gas recirculation valve control.

In the expression the last quantitative intake air characteristic $\Delta Qt'(i)$, which is enhanced in itself, is used to further bring the corrective amount of exhaust gas recirculation valve control $\Delta Tegr$ to an appropriate corrective amount according to an individual difference of the cylinder 2$(i)$. When the corrective amounts of exhaust gas recirculation valve control $\Delta Tegr$ for all of the cylinder are calculated at step S130, an average corrective amount of exhaust gas recirculation valve control $\Delta Tegr\text{-}av$ for the four cylinders is calculated. Although the average corrective amount of exhaust gas recirculation valve control $\Delta Tegr\text{-}av$ essentially be zero, it takes a minus or a plus value due to various causes as a result of calculating a corrective amount of exhaust gas recirculation valve control $\Delta Tegr$ from the above expression at step S131. The essential purpose in correctively controlling the amount of exhaust gas recirculation valve control $Tegr$ for each cylinder 2 by using the basic amount of exhaust gas recirculation valve control $Tegr$ as a criterion is possibly vitiated. Therefore, the average corrective amount of exhaust gas recirculation valve control $\Delta Tegr\text{-}av$ is always kept zero by an adding the absolute value of the average corrective amount of exhaust gas recirculation valve control $\Delta Tegr\text{-}av$ to the corrective amount of exhaust gas recirculation valve control $\Delta Tegr(i)$ for each cylinder 2$(i)$ when it takes a minus value or by subtracting the absolute value of the average corrective amount of exhaust gas recirculation valve control $\Delta Tegr\text{-}av$ from the corrective amount of exhaust gas recirculation valve control $\Delta Tegr(i)$ for each cylinder 2$(i)$ when it takes a plus value at step S131. The corrective amount of exhaust gas recirculation valve control $\Delta Tegr(i)$ thus obtained is added by the basic amount of exhaust gas recirculation valve control $Tegr$ as a current correctiveamount of exhaust gas recirculation valve control $\Delta Tegr(i)$ at step S132.

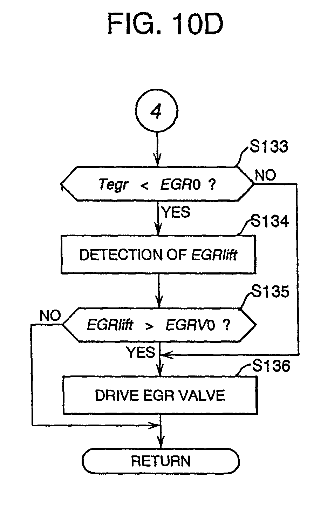

Figure 10D is a part of the general routine of exhaust gas recirculation valve control for presetting the exhaust gas recirculation valve 24 when the diesel engine 1 is determined to have shifted to the accelerative drive state based on an acceleration coefficient $\alpha$ at step S117 in the drive state judgement sequence routine shown in Figure 10B, the target amount of exhaust gas recirculation valve control $KTegr$ thus determined at step S118 is different according to acceleration coefficients $\alpha$ and target A/F ratios $TA/F$. The exhaust gas recirculation 24 is closed for greater acceleration coefficients $\alpha$. In such a case, an increased amount of intake air is introduced into each cylinder 2 because of no exhaust gas that is recirculated, so that the diesel engine 1 provides increased output torque without causing an increase in smoke even when an increased amount of fuel is delivered into each cylinder 2. In addition, in such the case, control for presetting the exhaust gas recirculation 24 is performed so as to perform the exhaust gas recirculation control as soon as possible. Specifically, the exhaust gas recirculation 24 balances force of the spring 24d acting on the valve body 24c in a closing direction with valve control negative pressure by means of supplying predetermined valve control negative pressure (presetting negative pressure) into the upper or negative pressure chamber 24f so that pressing force with which the valve body 24c is pressed against the valve seat by the spring 24d is weak, or otherwise zero, even while the exhaust gas recirculation 24 closes the Exhaust gas recirculation passage 23. The presetting negative pressure is valve control negative pressure at a point of time that the valve lift reaches zero when the exhaust gas recirculation 24 is forced in the closing direction as shown in Figure 4B.

As shown in Figure 10D, when the amount of exhaust gas recirculation valve control $Tegr$ is less than a specific amount of exhaust gas recirculation valve control $Tegr0$ that provides a valve lift of zero $EGRV0$ at step S133, a valve lift $EGRVlift$ detected by the valve lift sensor 26 is read in at step S134. When the valve lift $EGRVlift$ is greater than the zero valve lift $EGRV0$ at step S135, the valve control pressure is lowered until the exhaust gas recirculation valve 24 attains the zero valve lift $EGRVO$ at step S136. On the other hand, when the amount of exhaust gas recirculation valve control $Tegr$ is greater than the specific amount of exhaust gas recirculation valve control $Tegr0$, the control proceeds directly to step S225 to lower the valve control pressure until the exhaust gas recirculation valve 24 attains the zero valve lift $EGRV0$. According to the exhaust gas recirculation valve preset control, the amount of exhaust gas recirculation is made zero once when the diesel engine 1 shifts to the accelerative drive state from the ordinary drive state and, thereafter, the exhaust gas recirculation valve 24 under application of presetting negative pressure thereto is forced to quickly open without a time delay in response to an increase in the amount of exhaust gas recirculation valve control $Tegr$.

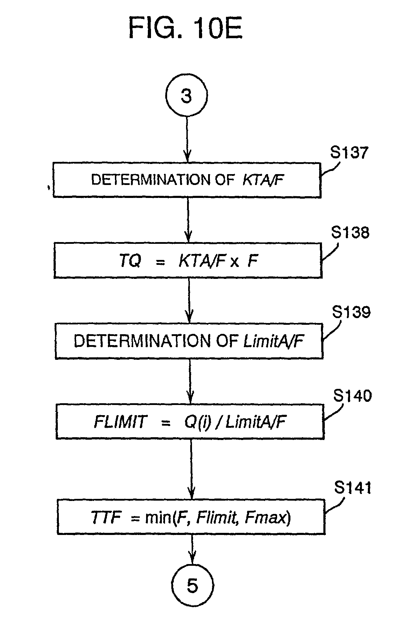

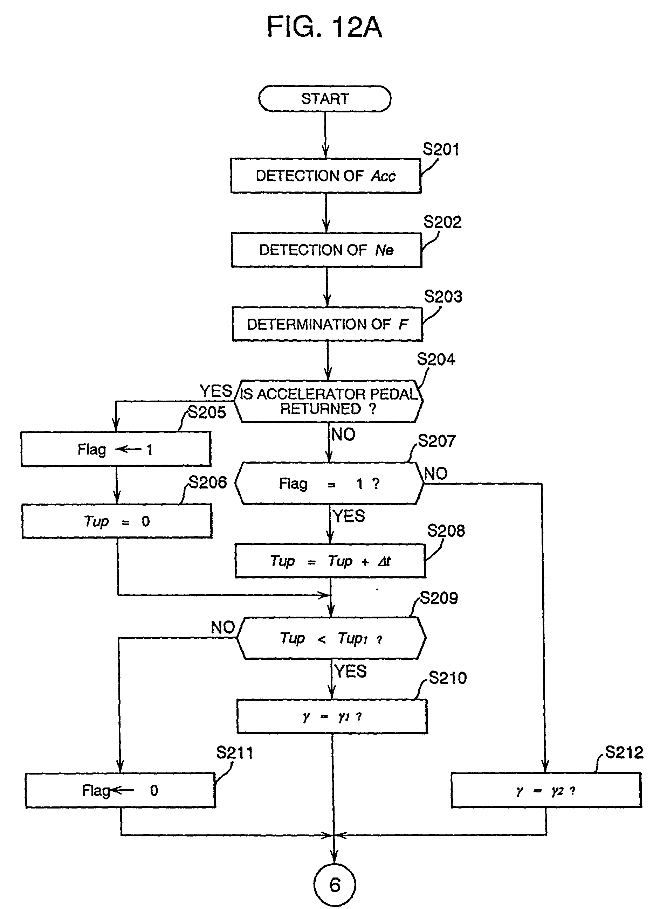

Figure 10E shows a part of the general sequence routine of exhaust gas recirculation control for fuel injection control which is performed when the diesel engine 1 is determined to have shifted to the accelerative drive state based on a fuel injection amount change coefficient $\beta$ at step S122 in the drive state judgement sequence routine shown in Figure 10B. When the diesel engine 1 is determined to be in the accelerative drive state at step S122, an optimum target air-to-fuel ratio $KTA/F$ is determined with reference to a map (not shown) at step S137. The target air-to-fuel ratio $KTA/F$ upon a shift to the accelerative drive state is set to be larger than that in the ordinary drive state so as to quickly boost engine torque with an effect of controlling generation of smoke by lowering the amount of exhaust gas recirculation. The target air-to-fuel ratio map, which is electronically stored in the memory, defines a target air-to-fuel ratio $KTA/F$ so as to be greater according to amounts of fuel injection $F$ with a drop in engine load, an increasing change in fuel injection amount change coefficient $\beta$ or a drop in engine speed $Ne.$ Subsequently, a target amount of intake air *TQ* upon a shift to the accelerative drive state is calculated based on the target air-to-fuel ratio *KTA*/*F* and the amount of fuel injection *F* at step S138. An amount of exhaust gas recirculation valve control *Tegr* is determined based on the target amount of intake air *TQ* as determined in the ordinary drive state for providing an increase in the amount of intake air by means of quickly decreasing the amount of exhaust gas recirculation through steps S126 - S128 and S133 - S136. Thus, even though the target air-to-fuel ratio *KTA*/*F* is greater in the accelerative drive state than in the ordinary drive state , when, for example, the accelerator pedal is greatly pressed down in order to start the vehicle quickly (when the accelerator travel is changed more than a specified amount), fuel is delivered in excess into each cylinder 2. As a result, almost all of the excess fuel is possibly unburnt and discharged, which is often accompanied by a notably increased amount of smoke. Therefore, a certain limit is imposed to an increase in the amount of fuel so as to control the increase in the amount of fuel momentarily through steps S139 - S141. Specifically, a limit air-to-fuel ratio *LimitA*/*F* for controlling generation of smoke is determined with reference to a map (not shown) electronically stored in the memory in which a limit air-to-fuel ratio is defined with respect to an amount of fuel injection *F* and an engine speed *Ne* at step S139. The limit amount of smoke is greater in the accelerative drive state than in the ordinary drive state and is, for example, approximately 2 BU which does not affect on an increase in engine torque. As shown in Figure 11, the target air-to-fuel ratio *TA*/*F* during a shift to the accelerative drive state is greater than the target air-to-fuel ratio *KTA*/*F* in the ordinary drive state , and the limit air-to-fuel ratio *LimitA*/*F* is smaller than the target air-to-fuel ratio *KTA*/*F* in the ordinary drive state . The limit air-to-fuel ratio *LimitA*/*F* can be basically set to be greater with an increase in the amount of fuel injection and to be smaller with an increase in engine speed. Subsequently, after calculating a limit amount of fuel injection *FLimit* on the basis of the limit air-to-fuel ratio *LimitA*/*F* and the amount of intake air *Q(i)* at step S140, a target amount of fuel injection *TF* is set to the smallest one among a basic amount of fuel injection *F,* the limit amount of fuel injection *FLimit* and a maximum amount of fuel injection *Fmax* at step S141. The basic amount of fuel injection *F* is one determined on the basis of engine speed *Ne* and accelerator travel *Acc*, and the maximum amount of fuel injection *Fmax* is the upper limit that does not lead to damages of the diesel engine 1. Setting a target amount of fuel injection in this way makes it reliable to prevent a fuel mixture from being enriched in excess even there is an occurrence of a decline in the amount of exhaust gas recirculation during rapid acceleration, which prevents a significant increase in the amount of smoke with an effect of satisfying a driver's demand for acceleration.

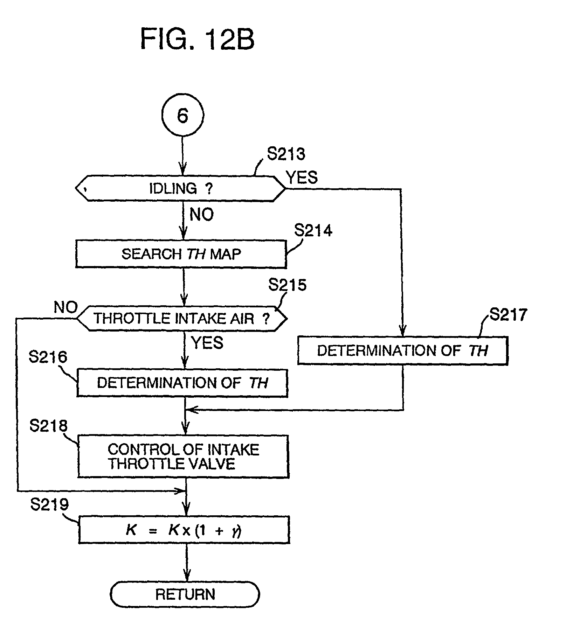

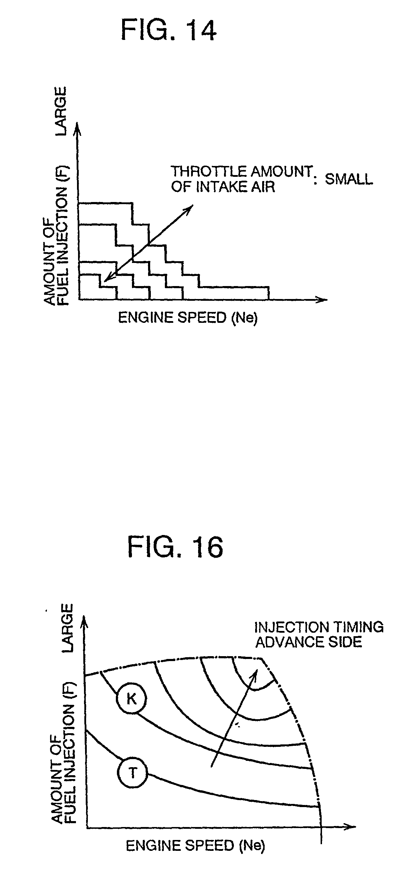

Figures 12A and 12B are a flow chart illustrating a sequence routine of intake throttle valve control which runs in synchronism with rotation of the diesel engine 1 according to a control program stored in the memory. After detecting an accelerator travel *Acc* and an engine speed *Ne* at step S201 and S202, respectively, an amount of fuel injection *F* is read in at step S203. Subsequently, a judgement is made at step S204 as to whether the accelerator pedal is released. When the accelerator pedal is rapidly eased by a specified return travel and completely released, an acceleration flag *Flag* is set up or to a state of "1" at step S205, and a counter is reset and starts to count a lapse of time *Tup* since the release of the accelerator pedal is detected. On the other hand, when the accelerator pedal still remain stepped on, another judgement is made at step S207 as to whether the acceleration flag *Flag* is up. When the acceleration flag *Flag* remains up, the counter changes its count *Tup* by an increment of Δ*t* at step S208. After resetting the counter at step S206 or after changing the count *Tup* of the counter by an increment of Δ*t* at step S208, a judgement is made at step S209 as to whether the count *Tup* has exceeded a predetermined count *Tup1*. While the count *Tup* is equal to or less than the predetermined count *Tup1*, a gain correction coefficient $\hat{\gamma}$ *1* for an exhaust gas recirculation control gain is read in from a map. As shown in Figure 13, in the $\hat{\gamma}$ *1*-map the gain correction coefficient $\hat{\gamma}$ *1* is experimentally defined according to the last throttling amount of intake throttle valve *TH* and engine speed *Ne* so as to provide an improved responsiveness of exhaust gas recirculation control to a release of the accelerator pedal. The gain correction coefficient $\hat{\gamma}$ *1* takes a value between zero and one which becomes smaller as the engine speed *Ne* increases or as the throttling amount of intake throttle valve *TH* increases. On the other hand, when the count *Tup* has exceeded the threshold count *Tup1*, the acceleration flag *Flag* is reset down or to a state of "0" at step S211. When a predetermined time has expired, i.e. when the predetermined count *Tup1* has been counted since the detection of a release of the accelerator pedal, the acceleration flag *Flag* remains reset down at step S207 in the following cycle, then, control proceeds to a block at step S212 where a gain correction coefficient $\hat{\gamma}$ *2* for the exhaust gas recirculation control gain is read in from a $\hat{\gamma}$ *2*-map. The $\hat{\gamma}$ *2*-map defines the gain correction coefficient $\hat{\gamma}$ *2*, which is greater than the gain correction coefficient $\hat{\gamma}$ *1*, for an exhaust gas recirculation control gain used in the ordinary drive state . After resetting the acceleration flag *Flag* down at step S207 or after reading a gain correction coefficient $\hat{\gamma}$ *1* or $\hat{\gamma}$ *2* at step S210 or S212, a judgement is made at step S213 as to whether the diesel engine 1 is in an idling state where the vehicle stops with the accelerator pedal remaining released. While the diesel engine 1 is idling, a throttling amount of intake throttle valve *TH* is determined so as to force the intake throttle valve 14 to completely close at step S217. On the other hand, when the diesel engine 1 is out of idling, a digital map (which corresponds to the target intake throttle valve throttling map 51 shown in Figure 5) in which an optimum throttling amount of intake throttle valve *TH* (i.e. a target throttling amount of intake throttle valve *THsol*) is experimentally defined with respect to the amount of fuel injection *F* and the engine speed *Ne* is referred. As shown in Figure 14, the optimum throttling amount of intake throttle valve *TH* is fixed to zero (0) so as to control the intake throttle valve 14 to fully open when at least one of the amount of fuel injection *F* and the engine speed *Ne* is great while the engine operates with high loads. Specifically, there is an apprehension of a lack of intake air due to an increased amount of exhaust gas admitted into the intake passage which is caused due to a large pressure difference between intake air and exhaust gas during operation of the diesel engine 1 in a range of high engine speeds and, on the other hand, there is an apprehension of a lack of intake air with respect to fuel an increased amount of fuel during operation of the diesel engine 1 in a range of high engine loads. However, according to the control system of the invention, an increase in the amount of smoke due to a lack of intake air is prevented by keeping the intake throttle valve 14 remain fully open so as to introduce a sufficient amount of intake air. In a range of relatively low engine loads, the throttling amount of intake throttle valve *TH* is made larger with a decrease in the amount of fuel injection *F* or in engine speeds *Ne*. That is, although the lower the engine speed is, the smaller the pressure difference between intake air and exhaust gas is, a sufficient amount of exhaust gas admitted into the intake passage is assured by decreasing the throttling amount of intake throttle valve *TH* so as to increase the pressure difference even during operation of the diesel engine 1 in a range of low engine loads.

Thereafter, a decision is made at step S215 as to whether intake air must be throttled. This decision is made on the basis of the state of acceleration flag *Flag* and the throttling amount of intake throttle valve *TH*. When the answer is affirmative, this indicates that the acceleration flag *Flag* is up and the engine operates out of the range of high engine speeds or high engine loads, a throttling amount of intake throttle valve *TH* is determined with reference to the throttling map at step S216. After the determination of a throttling amount of intake throttle valve *TH* at step S216 or S317, a control signal representative of the throttling amount of intake throttle valve *TH* is sent to the vacuum control electromagnetic valve 16 so as to control the intake throttle valve 14 to attain the throttling amount of intake throttle valve *TH* at step S218. After driving the intake throttle valve 14 at step S218 or when the answer to the decision made at step S215 is negative, this indicates that the acceleration flag *Flag* is down or the engine operates in the range of high engine speeds or high engine loads even while the acceleration flag *Flag* is up, a gain coefficient K based on which an exhaust gas recirculation valve control gain is determined and which is given by the following expression is calculated at step S219.

$$K = K \text{ x } (1 + \ddot{\Upsilon})$$

When the gain correction coefficient $\dot{\Upsilon}$ 1 for the accelerator pedal fully released has been read the gain coefficient *K* is increased by a difference between the gain correction coefficient $\dot{\Upsilon}$ 1 and the gain correction coefficient $\dot{\Upsilon}$ 2 for the exhaust gas recirculation control gain. The gain coefficient *K* is greater as compared to that for ordinary driving conditions. As a result, control gains for proportional control, integral control and differential control are increased, so as to increase the responsiveness of operation of the exhaust gas recirculation valve 24. That is, in a specified period of time from a detection of releasing the accelerator pedal in which the accelerator travel is abruptly changing, the exhaust gas recirculation valve 24 is forced to operate certainly following the abrupt change in accelerator travel without a delay. The specified time, which is a relatively short, for example one to two seconds, spent to operate a manual transmission for a gear shift, does not cause aggravation of the convergency of control. With the intake throttle valve control, when it is forecasted that the accelerator is stepped on and pressed down for starting the vehicle while the engine 1 is idling for example, the valve lift of exhaust gas recirculation valve 24 is previously made small by fully closing the intake throttle valve 14, as a result of which an operational delay of exhaust gas recirculation valve 24 is decreased as small as possible even at a start of acceleration and accordingly fuel is prevented from being enriched without decreasing the amount of fuel injection. This leads to a decrease in smoke in the exhaust gas.

In addition to the control of intake throttle valve 14, the control system performs advancing a fuel injection timing at a start of acceleration with an effect of effectively decreasing smoke without rising NOx emission elevel.

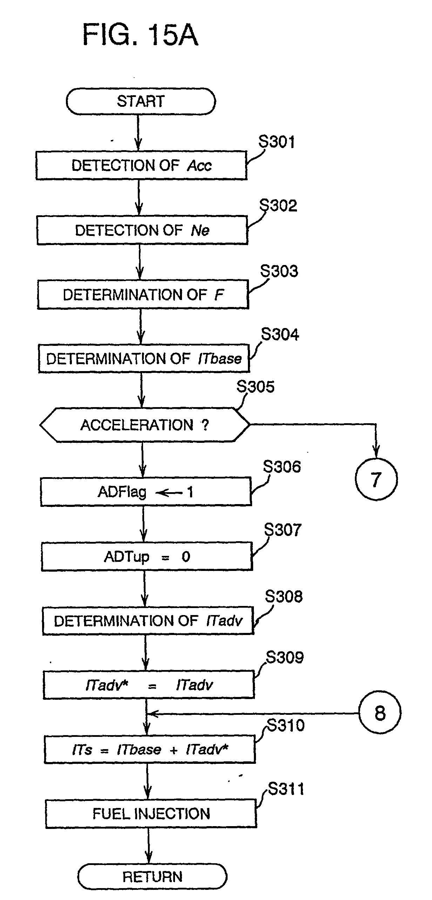

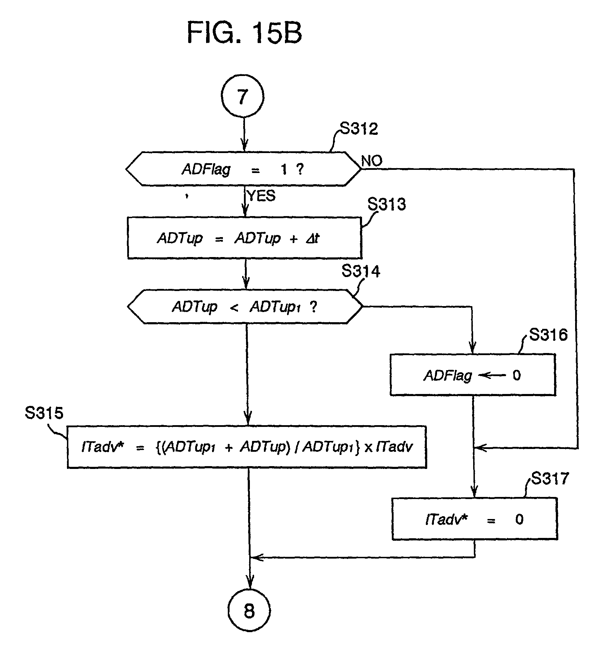

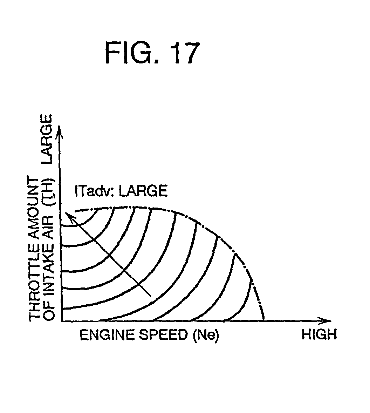

Figures 15A and 15B are a flow chart illustrating a sequence routine of fuel injection timing control which runs in synchronism with rotation of the diesel engine 1 according to a control program stored in the memory. When the sequence logic commences, after detecting an accelerator travel *Acc* and an engine speed *Ne* at step S301 and S302, respectively, an amount of fuel injection *F* is read in at step S303. At step S304, a basic injection timing *ITbase* is determined with reference to a basic injection timing map with respect to the engine speed *Ne* and the amount of fuel injection *F*. In the basic injection timing map, which is electronically stored in the memory, a basic injection timing *ITbase* is experimentally defined such that the basic injection timing is more advanced with an increase in engine speed *Ne* and/or the amount of fuel injection *F* as shown in Figure 16. Subsequently, a judgement is made at step S305 as to whether the diesel engine 1 is at the beginning of acceleration. This judgement is performed on the basis of an acceleration coefficients $\alpha$ and a fuel injection amount change coefficient $\beta$ in the same manner as the judgement as to the fuel injection amount change coefficient $\beta$ made at step S122 in the intake throttle valve control. When the diesel engine 1 enters the accelerative drive state wherein both acceleration coefficients $\alpha$ and fuel injection amount change coefficient β are greater than one (1) from the ordinary drive state wherein they are equal to or smaller than one (1), after setting an advance flag ADFlag to a state of "1" which indicates that it is in an initial period of acceleration in which the fuel injection timing is to be advanced at step S306 and resetting a counter which counts time since the diesel engine 1 enters the accelerative drive state at step S307, an injection timing advancing value $ITbadv$ is determined with reference to an advancing value map at step S308. As shown in Figure 17, in the advancing value map which is electronically stored in the memory, an advancing value $ITadv$ is experimentally defined with respect to a throttling amount of intake throttle valve $TH$ and an engine speed $Ne$ such that the advancing value is made smaller with a drop in engine speed $Ne$ in a range of high and middle engine speeds and, however, made large with an increase in throttling amount of intake throttle valve $TH$, i.e. a decrease in valve lift of the intake throttle valve 14. This advancing value $ITadv$ is taken as a current advancing value $ITadv*$ at step S309. On the other hand, when the diesel engine 1 is still in the ordinary drive state or continuously stays in the accelerative drive state at step S305, a judgement is made at step S312 as to whether the advance flag ADFlag is up or in the state of "1". When the advance flag ADFlag is up, then, it is determined that the initial period of acceleration (for example 0.1 to 0.3 seconds) has not yet expired and the counter changes its count $ADTup$ by an increment of $\Delta t$ at step S313. Subsequently, a judgement is made at step S314 as to whether the count $ADTup$ is still less than a specified value $ADTup1$ which corresponds to the initial period of acceleration. When the count $ADTup$ is still less than a specified value $ADTup1$, this indicates that it is within the specified period of time since the diesel engine 1 enters the acceleration drive state, then, a calculation is made at step S315 to determine a current advancing value $ITadv*$ on the basis of the advancing value $ITadv$ which is determined with respect to the throttling amount of intake throttle valve $TH$ and the engine speed $Ne$ at step S308. The current advancing value $ITadv*$, which is given by the following expression, is determined such that an advancing value $ITadv$ determined according to engine operating conditions during the acceleration judgement is made just zero after expiration of the specified period of time since the diesel engine 1 enters the accelerative drive state.

$$ITadv* = \{(ADTup1 - ADTup)/ADTup1\} \times ITadv$$

On the other hand, when the count $ADTup$ exceeds the specified value $ADTup1$, the advance flag ADFlag is reset down to a state of "0" at step S306. When the advance flag ADFlag is down at step S312 or after resetting down the advance flag ADFlag at step S316, a current advancing value $ITadv*$ is fixed to zero at step S317. Subsequently to determining the current advancing value $ITadv*$ at step S309 or S317, a calculation is made to determine a fuel injection timing $ITs$ at which the injector 5 is energized to start fuel delivery by adding the current advancing value $ITadv*$ to the basic injection timing $ITbase$ at step S310. Finally, the injector 5 is energized to deliver fuel when it is detected on the basis of an output signal from the angle sensor 9 that the fuel injection timing $ITs$ is reached at step S311. As apparent, when the diesel engine 1 enters the accelerative drive state, the fuel injection timing is immediately advanced by an advancing value $ITadv$ according to engine operating conditions. The fuel injection timing $ITs$ is greatly advanced correspondingly to a delay in closing operation of the exhaust gas recirculation valve 24 immediately after the diesel engine 1 enters the accelerative drive state, and gradually retarded with a passage of time until expiration of the initial period of acceleration so as to respond to closing operation of the exhaust gas recirculation valve 24. After expiration of the initial period of acceleration, the advancing value $ITadv$ reaches zero and the fuel injection timing control is terminated.

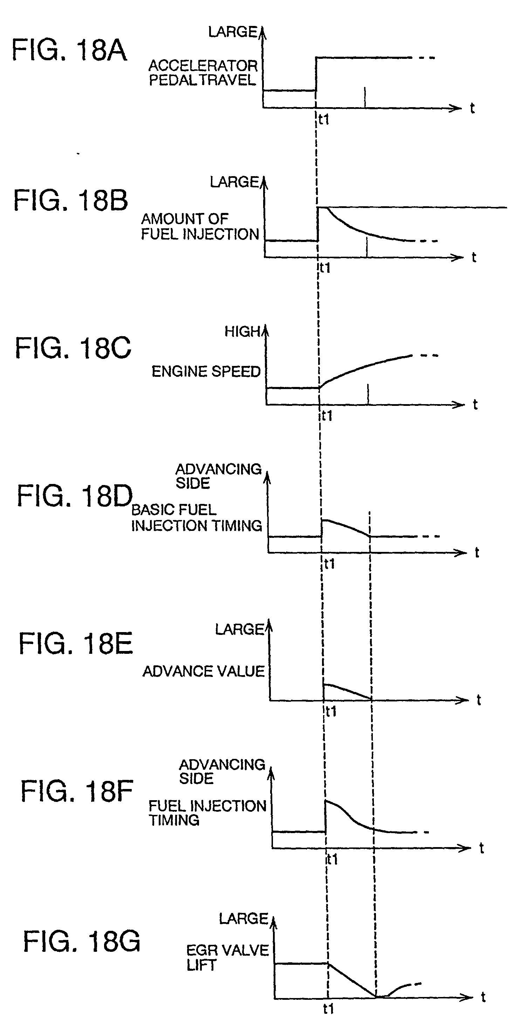

Reference is made to Figures 18 through 22 for the'purpose of providing the effects of the fuel injection timing control which will enhance an understanding of the feature of the control system of the invention.

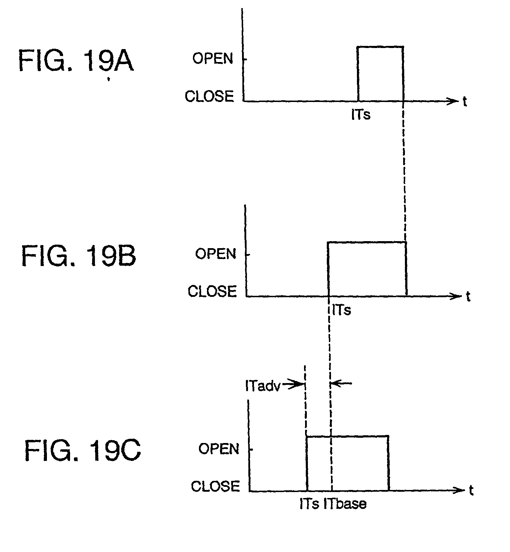

As shown in Figure 18 which is a time chart of the fuel injection timing control, while the diesel engine 1 operates in a range of lower speeds and lower loads with the accelerator pedal remaining pressed down by a small travel until expiration of time t1, the amount of fuel injection and the engine speed remain constant, respectively. The fuel injection timing is not advanced ($ITadv$ = 0) and fixed to a basic fuel injection timing $ITbase$ determined according to the engine operating condition marked (T) in Figure 16. Since the diesel engine 1 operates in the state of low engine loads, the exhaust gas recirculation valve 24 is held in a fixed valve lift position to admit exhaust gas into the intake passage. When the accelerator pedal is pressed down with a rapid change in travel at the time t1 by the driver, the amount of fuel injection is correspondingly increased. At this time, since the diesel engine 1 is changed in its operating condition from (T) to (K) as marked in Figure 16, the basic fuel injection timing $ITbase$ is advanced correspondingly to an increase in the amount of fuel injection as shown in Figure 19B more greatly by a difference between the amounts of fuel injection from the basic fuel injection timing shown in Figure 19A. The fuel injection timing $ITs$ is further advanced by a current advancing value $ITadv*$ which is calculated on the basis of a change in accelerator travel due to entering the accelerative drive state as shown in Figure 19C. Simultaneously, the intake throttle valve 14 is promptly opened and the exhaust gas recirculation valve 24 is operated to close according to an increase in the amount of fuel injection, so as to provide a decrease in the amount of exhaust gas that is admitted into the intake passage and an increase in the amount of intake air introduced into the intake passage.

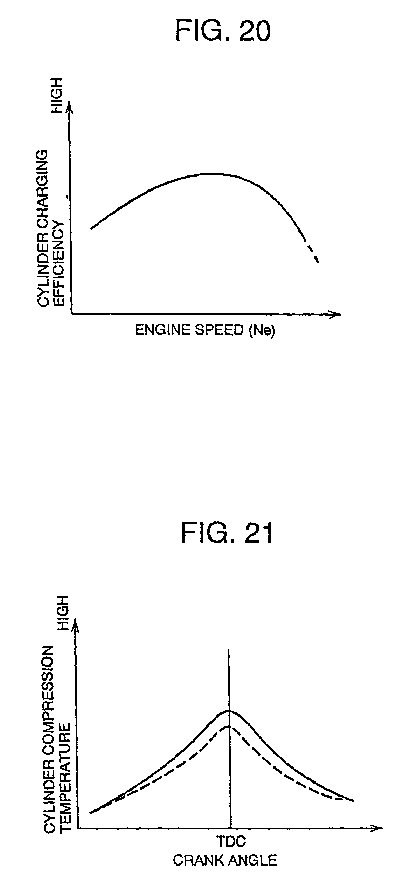

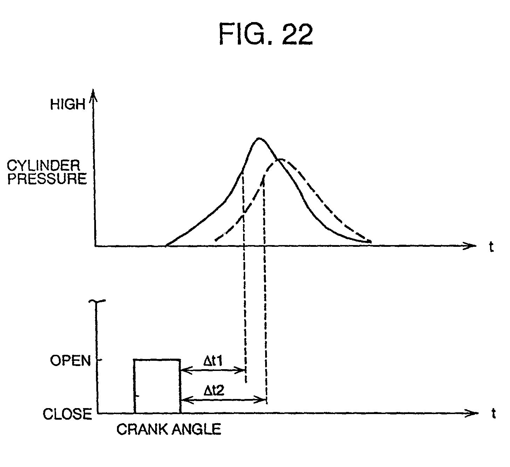

Because the exhaust gas recirculation valve 24 remains open so as to admit a sufficient amount of exhaust gas into the intake passage prior to acceleration while the diesel engine operates in the range of low engine speeds and low engine loads, it is not fully closed soon but gradually closed in response to a rapid travel of the accelerator pedal. The delay in closing operation of the exhaust gas recirculation valve 24 is decreased by the intake throttle valve control described in conjunction with Figures 12A through 12E and however impossible to be perfectly eliminated. Therefore, the amount of exhaust gas that is admitted into the intake passage is temporarily increased due to the delay in closing operation, and hence, in couple with an increase in the amount of fuel injection, fuel is enriched, as a result of which there occurs an increase in smoke in the exhaust gas. Nevertheless, the control system of this invention greatly advances the fuel injection timing *ITs* immediately when the diesel engine 1 enters the accelerative drive state so as to deliver fuel into each combustion chamber 4 in an early stage, as a result of which the fuel is sufficiently pre-mixed with air in the combustion chamber 4 and a time allowed for the fuel to be vaporized and atomized is sufficiently prolonged with an effect of enhancing the combustion velocity of the fuel mixture and restricting generation of smoke. That is, when the diesel engine 1 enters the accelerative drive state, the control system according to the above embodiment prevents or significantly restricts an increase in the amount of smoke in the exhaust gas due to a delay in operation of the exhaust gas recirculation valve 24 by enhancing the combustion velocity of fuel by advancing the fuel injection timing *ITs*. In addition, the engine output is raised due to an enhanced combustion velocity of fuel, so as to provide a rapid boost of engine speed with an effect of providing an engine output characteristic favorable to acceleration of the vehicle. On the other hand, while a rise in combustion gas temperature which is caused by rapid combustion provides a tendency to rise the level of NOx emissions, however, in a period of time in which there is an increase in the amount of exhaust gas that is recirculated which temporarily occurs due to a delay in operation of the exhaust gas recirculation valve 24, generation of NOx emissions is controlled by the increase in the amount of exhaust gas that is recirculated. Accordingly, the control system according to the above embodiment provides a more decrease in the amount of smoke without causing a drop in NOx emission level even at the beginning of acceleration of the vehicle as compared with the prior art control system. The fuel injection timing *ITs* is advanced more greatly as the engine speed drops and/or as the throttling amount of intake throttle valve *TH* increases, i.e. as the valve lift of the intake throttle valve 14 decreases, as shown in Figure 17. That is, as shown in Figure 20, a charging efficiency at which the diesel engine 1 is charged with air shows a peak value at middle engine speeds and lowers as the engine speed drops from the middle engine speed. Further, the charging efficiency is more easy to lower due to fluid resistance of intake air which increases higher as the throttling amount of intake throttle valve *TH* decreases. Since, the compressive temperature in the cylinder is lower for a same ignition timing when the charging efficiency is low than when the charging efficiency is high as shown by a broken line in Figure 21, the amount of smoke increases due to slow combustion which is induced by a prolonged ignition delay of fuel mixture. Specifically, as shown in Figure 22, even in the case where fuel is injected at a same rate at a same timing, when the temperature inside the cylinder becomes high due to a relatively high charging efficiency at which the diesel engine 1 is charged with air, the ignition delay of fuel mixture Δt1 is shortened as shown by a solid line and a rise time of combustion is shortened, as a result of which combustion pressure is high, so that the combustion is completed in a short period of time. On the other hand, when the temperature inside the cylinder becomes low due to a relatively low charging efficiency at which the diesel engine 1 is charged with air, the ignition delay of fuel mixture Δt2 is prolonged as shown by a broken line and the overall combustion is slow and prolonged, as a result of which smoke is increased. Further, a low charging efficiency is apt to cause a lack of fresh intake air, which is accompanied by an easy delivery of enriched fuel mixture and an increase in the amount of smoke. However, with the control system according to the above embodiment, the fuel injection timing is advanced more greatly as the engine operating condition becomes more easy to generate smoke, namely as the engine speed drops and/or as the throttling amount of intake throttle valve *TH* increases, so as to compensate a prolonged ignition delay and a lack of fresh intake air with an effect of restricting an increase in the amount of smoke in the exhaust gas. Further, as shown in Figure 18E, the advancing value *ITadv\** has its peak immediately after the diesel engine 1 has entered the accelerative drive state, gradually lowers as the exhaust gas recirculation valve 24 gradually closes until expiration of the initial period of acceleration and reaches zero after expiration of the initial period of acceleration. Accordingly, the fuel injection timing *IT*s is advanced most greatly immediately after the determination that the diesel engine has entered the acceleration drive state and, thereafter, gradually retarded correspondingly to a decrease in the difference of an air-to-fuel ratio from a target air-to-fuel ratio during the control of air-to-ratio toward the target air-to-fuel ratio following the valve lift control of exhaust gas recirculation valve 24. After expiration of the initial period of acceleration, the fuel injection timing *ITs* is returned to a basic fuel injection timing *ITbase* for the ordinary drive state. As described above, by strictly correcting the fuel injection timing *ITs* correspondingly to differences between an air-to-fuel ratio and a target air-to-fuel ratio, it is realized to advance more greatly as the difference becomes greater or more smaller as the difference becomes smaller, as a result of which both a decrease in the amount of smoke and a drop in NOx emission level are achieved with a high level when the diesel engine 1 enters the acceleration drive state.

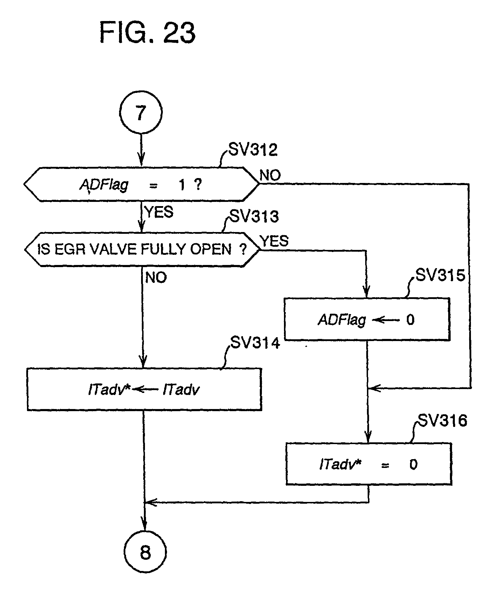

Figure 23 is a flow chart illustrating a variation of the sequence routine of fuel injection timing control shown in Figures 15A and 15B. In the variant sequence routine of fuel injection timing control, the fuel injection timing is greatly advanced at the beginning of acceleration and the advancing value *ITadv\** for fuel injection timing is decreased according to valve lifts of the exhaust gas recirculation valve 24 with a decrease in exhaust gas recirculation valve lift. Specifically, in the part of the sequence routine of fuel injection timing control shown in Figure 15A, when the sequence logic commences, after detecting an accelerator travel *Acc* and an engine speed *Ne* at step S301 and S302, respectively, an exhaust gas recirculation valve lift θ is read in as well as an amount of fuel injection *F* at step S303. At step S304, a basic injection timing *ITbase* is determined with reference to a basic injection timing map with respect to the engine speed *Ne*, the amount of fuel injection *F* and the exhaust gas recirculation valve lift θ. Subsequently, a judgement is made at step S305 as to whether the diesel engine 1 is at the beginning of acceleration. This judgement is performed on the basis of an acceleration coefficients α and a fuel injection amount change coefficient β in the same manner as previously described. When the diesel engine 1 enters the accelerative drive state, the sequence logic proceeds to steps S306 through S311 as described previously. On the other hand, when the diesel engine 1 is still in the ordinary drive state or continuously stays in the accelerative drive state at step S305, as shown in Figure 23, a judgement is made at step SV312 as to whether the advance flag ADFlag is up or in the state of "1". When the advance flag ADFlag is up, this indicates that the initial period of acceleration has not yet expired, then, another judgement is made at step SV313 as to whether the exhaust gas recirculation valve has been fully closed. When the exhaust gas recirculation valve 24 still remains open, this means that a delay in operation of the exhaust gas recirculation valve 24 is not yet cancelled, then, a current advancing value *ITadv\** is determined by correcting an advancing value *ITadv* according to the exhaust gas recirculation valve lift θ at step SV314. On the other hand, when the advance flag ADFlag is down at step SV312 or after resetting down the advance flag ADFlag at step SV315 when the exhaust gas recirculation valve 24 has been fully closed, a current advancing value *ITadv\** is fixed to zero at step SV314. Subsequently to determining the current advancing value *ITadv\** at step SV314 or SV316, the sequence logic proceeds to step S310 for the calculation of a fuel injection timing *ITs* in the part of the sequence routine of fuel injection timing control shown in Figure 15A.

The advancing value correction made at step SV314 can be made by multiplying an advancing value *ITadv* by a correction coefficient which is experimentally mapped with respect to exhaust gas recirculation valve lift θ and engine speed *Ne.* By such a correction, the fuel injection timing is gradually retarded as the exhaust gas recirculation valve 24 is gradually closed.

According to the variant sequence routine of fuel injection timing control, the fuel injection timing *ITs* is greatly advanced immediately after the diesel engine 1 has entered the acceleration drive state and, thereafter, gradually retarded correspondingly to a decrease in exhaust gas recirculation valve lift θ until expiration of the initial period of acceleration in which the exhaust gas recirculation valve fully closes, as a result of which, even if the air-to-fuel ratio temporarily deviates toward a rich side due to an operational delay of the exhaust gas recirculation valve 24 at the beginning of acceleration,

the fuel injection timing *ITs* is strictly and precisely advanced correspondingly to deviations of air-to-fuel ratio, so that both decrease in the amount of smoke and drop in NOx emission level are achieved with a high level when the diesel engine 1 enters the acceleration drive state.

Although the amount of exhaust gas recirculation is controlled by cylinder according to an amount of intake air introduced into each cylinder so as to bring an air-to-fuel ratio relating to each cylinder into coincidence with a target air-to-fuel ratio determined commonly to all of the cylinders of the diesel engine 1 in the above embodiment, the amount of exhaust gas recirculation may be controlled for the cylinders all together on the basis an average value of amounts of intake air introduced into the respective cylinders. Further, the amount of exhaust gas recirculation may be controlled according to engine operating conditions without using a target air-to-fuel ratio. Although the amount of intake air is directly detected by the air flow sensor 11 in the above embodiment, it may be detected indirectly from the amount of exhaust gas recirculation which is obtained from a valve lift of the exhaust gas recirculation valve 24 and the pressure of intake air in the intake passage 10. The intake throttle valve 14 disposed in the intake passage 10 is not always essential. In the event where the intake throttle valve 14 is omitted, the specified period of time, i.e. the initial period of acceleration, in which the fuel injection timing is advanced is prolonged according to a prolonged operational delay of the exhaust gas recirculation valve 24 at the beginning of acceleration.

**Claims**

1. A control system for a diesel engine equipped with an exhaust gas recirculation valve (24) operative to control an amount of exhaust gas that is partly recirculated from an exhaust passage (20) into an intake passage (10) through an exhaust gas recirculation passage (23) and exhaust gas recirculation control means (35, 35b) for feedback controlling a valve lift of the exhaust gas recirculation valve (24) to change an amount of fresh air introduced into the intake passage (10) according to a change in the amount of exhaust gas admitted into the intake passage (10) so as thereby to bring an air-to-fuel ratio into coincidence with a specified target air-to-fuel ratio while the diesel engine is in an ordinary drive state,

**characterized in that**:

said exhaust gas recirculation control means (35, 35b) feedback controls said valve lift of the exhaust gas recirculation valve (24) to change said amount of fresh air so as thereby to bring an air-to-fuel ratio into coincidence with a specified target air-to-fuel ratio for an accelerative drive state which is different from said specified target air-to-fuel ratio for said ordinary drive state while the diesel engine is in said accelerative drive state where an amount of fuel injection is increased, said specified target air-to-fuel ratio for said accelerative drive state being leaner than said specified target air-to-fuel ratio for said ordinary drive state while the diesel engine operates at constant accelerator travel and engine speed, and fuel injection timing control means detects that the diesel engine enters said accelerative drive state, performs advancing control of fuel injection timing so as to terminate fuel injection earlier, when having detected that the diesel engine has entered the accelerative drive state while controlling said amount of exhaust gas that is partly recirculated, than a point of time immediately before detecting that the diesel engine has entered the accelerative drive state, starts said advancing control of fuel injection timing immediately when detecting that that the diesel engine has entered the accelerative drive state and advances a fuel injection timing for a predetermined initial period of acceleration only.

2. A control system for a diesel engine as defined in claim 1, wherein said exhaust gas recirculation control means (35, 35b) feedback controls a valve lift of said exhaust gas recirculation valve (24) to change an amount of fresh intake air introduced into said intake passage (10) upstream from a point where said exhaust gas is admitted and an amount of fuel injection according to accelerator travels so as to bring an air-to-fuel ratio into coincidence with a specified target air-to-fuel ratio.

3. A control system for a diesel engine as defined in claim 1, wherein said fuel injection timing control means (35, 35a) starts said advancing control of fuel injection timing immediately when detecting that the diesel engine has entered the accelerative drive state and terminates said advancing control of fuel injection timing after expiration of said predetermined initial period of acceleration since detecting that the diesel engine has entered the accelerative drive state.

4. A control system for a diesel engine as defined in claim 3, wherein said fuel injection timing control means (35, 35a) gradually decreases an advance of fuel injection timing according to a lapse of time since detecting that the diesel engine has entered the accelerative drive state so as to accord a decrease in said valve lift of the exhaust gas recirculation valve.

5. A control system for a diesel engine as defined in claim 1, wherein an intake throttle valve (14) is installed in said intake passage (10) upstream from a point where said exhaust gas is admitted and controlled to remain closed by a predetermined amount so that said exhaust gas recirculation control means (35, 35b) keeps said exhaust gas recirculation valve (24) out of a full open position while the diesel engine operates in a specified range of lower speeds and lower loads.

6. A control system for a diesel engine as defined in claim 5, wherein said fuel injection timing control means (35, 35a) advances a fuel injection timing by an advance which is made greater with a decrease in valve lift of said intake throttle valve (14).

7. A control system for a diesel engine as defined in claim 1, wherein said fuel injection timing control means (35, 35a) executes said advancing control of fuel injection timing when detecting that the diesel engine has entered the accelerative drive state at least while the diesel engine operates in a specified range of lower speeds.

8. A control system for a diesel engine as defined in claim 7, wherein said fuel injection timing control means (35, 35a) advances a fuel injection timing by an advance which is greater while the diesel engine operates to accelerate in said specified range of lower speeds than while the diesel engine operates to accelerate in a specified range of middle speeds.

9. A control system for a diesel engine as defined in claim 1 or 2, wherein said target air-to-fuel ratio is determined so as to accord a gradual-to- rapid change in an amount of smoke in an exhaust gas caused by a change in air-to-fuel ratio toward a rich side.

10. A control system for a diesel engine as defined in claim 1 or 2, wherein said amount of fuel injection and said target air-to-fuel ratio are mapped with respect to engine operating conditions, respectively.

**11.** A control system for a diesel engine as defined in claim 1, wherein said fuel injection timing control means (35, 35a) starts said advancing control of fuel injection timing immediately when detecting that the diesel engine has entered the accelerative drive state and terminates said advancing control of fuel injection timing when exhaust gas recirculation valve (24) attains a valve lift smaller than a predetermined valve lift.

**12.** A control system for a diesel engine as defined in claim 11, wherein said fuel injection timing control means (35, 35a) advances a fuel injection timing by an advance which is made gradually greater with a decrease in valve lift of said exhaust gas recirculation valve (24).

**13.** A control system for a diesel engine as defined in claim 1, wherein an intake throttle valve (14) is installed in said intake passage (10) upstream from a point where said exhaust gas is admitted, and controlled to remain closed by a predetermined amount so that said exhaust gas recirculation control means (35, 35b) keeps said exhaust gas recirculation valve (24) out of a full open position while the diesel engine operates in a specified range of lower speeds and lower loads, said exhaust gas recirculation control means (35, 35a) feedback controls a valve lift of said exhaust gas recirculation valve (24) to change an amount of fresh intake air introduced into said intake passage (10) upstream from a point where said exhaust gas is admitted and an amount of fuel injection which is determined according to accelerator travels so as to bring an air-to-fuel ratio into coincidence with a specified target air-to-fuel ratio, and said fuel injection timing control means (35, 35a) starts said advancing control of fuel injection timing in which an advance by which a fuel injection timing is advanced is made greater with a decrease in valve lift of said intake throttle valve (14) immediately when detecting that the diesel engine has entered the accelerative drive state and terminates said advancing control of fuel injection timing after continuing said advancing control of fuel injection timing until expiration of said predetermined initial period of acceleration since detecting that the diesel engine has entered the accelerative drive state.

**Revendications**

**1.** Système de commande pour un moteur Diesel équipé d'une soupape de recyclage de gaz d'échappement (24) adapté à contrôler la quantité de gaz d'échappement, qui est en partie recyclée, depuis un passage d'échappement (20) dans un passage d'admission (10) à travers un passage de recyclage (23) et un moyen de contrôle du recyclage de gaz d'échappement (35, 35b) pour contrôler par rétroaction une levée de clapet de la soupape de recyclage de gaz d'échappement (24) afin de modifier la quantité d'air frais introduit dans le passage d'admission (10) selon un changement de la quantité de gaz d'échappement admise dans le passage d'admission (10) de façon, par ce moyen, à faire coïncider le rapport air / carburant, avec une valeur spécifiée de consigne du rapport air / carburant, pendant que le moteur Diesel est dans une situation de fonctionnement ordinaire,

**caractérisé en ce que**

ledit moyen de contrôle du recyclage des gaz d'échappement (35, 35b) contrôle par rétroaction ladite levée du clapet de la soupape de recyclage de gaz d'échappement (24) pour modifier la quantité d'air frais, de façon, par ce moyen, à faire coïncider le rapport air / carburant, avec une valeur spécifiée de consigne de rapport air / carburant, pour une situation d'accélération, qui est différent de ladite valeur spécifiée de consigne de rapport air / carburant, pour ledit régime de fonctionnement ordinaire, alors que le moteur Diesel est dans une situation d'accélération où le taux d'alimentation en carburant augmente, ladite valeur de consigne spécifiée du rapport air / carburant, pour ladite phase d'accélération, étant plus maigre que la valeur de consigne spécifiée du rapport air / carburant, pour le régime de conduite normale, pendant que le moteur Diesel fonctionne à des valeurs constantes de la course d'accélérateur et de la vitesse du moteur, et que le moyen de commande temporelle d'injection détecte que le moteur Diesel entre dans une phase d'accélération, réalise plus tôt une commande avancée du moment d'injection, de façon à interrompre l'injection de carburant lorsque étant détecté que le moteur Diesel est entré dans une phase d'accélération, tout en contrôlant la quantité de gaz d'échappement qui est en partie recyclée, à un instant précédant immédiatement la détection du fait que le moteur Diesel est entré dans une phase d'accélération, commence la commande avancée du moment d'injection dès qu'il est détecté que le moteur Diesel est entré dans une phase d'accélération et fait avancer l'instant d'injection de carburant seulement pendant une période initial prédéterminée d'accélération.

**2.** Système de commande pour un moteur Diesel, suivant la revendication 1, dans lequel le moyen de contrôle du recyclage de gaz d'échappement (35, 35b), contrôle par rétroaction une levée du clapet de ladite soupape de recyclage de gaz d'échappement (24) pour modifier la quantité d'air frais, introduit dans le passage d'admission (10) en amont d'un point où ledit gaz d'échappement est admis et une quantité d'injection de carburant, fonction de la course de l'accélérateur, de façon à faire coïncider le rapport air / carburant, avec une valeur spécifiée de consigne du rapport air / carburant.

**3.** Système de commande pour un moteur Diesel, suivant la revendication 1, dans lequel le moyen de commande temporelle d'injection (35, 35a) commence cette commande avancée du moment d'injection, dès que l'on détectent que le moteur Diesel est entré dans une phase d'accélération et termine ladite commande avancée de l'instant d'injection après expiration de ladite période initial prédéterminée d'accélération, à partir du moment où l'on a détecté que le moteur Diesel est entré dans une phase d'accélération.

**4.** Système de commande pour un moteur Diesel, suivant la revendication 3, dans lequel le moyen de commande temporelle de l'injection (35, 35a) diminue progressivement une avancée de l'instant d'injection, selon un laps de temps, à partir du moment où l'on a détecté que le moteur Diesel est entré dans une phase d'accélération, de façon à s'accorder avec une diminution de la levée du clapet de la soupape de recyclage de gaz d'échappement.

**5.** Système de commande pour un moteur Diesel, suivant la revendication 1, dans lequel un papillon d'admission des gaz (14) est introduit dans le passage d'admission (10), en amont d'un point où ledit gaz d'échappement est admis et commandé pour rester fermé d'une quantité prédéterminée, de façon à ce que ledit moyen de contrôle du recyclage de gaz d'échappement (35, 35b) empêche la soupape de recyclage de gaz d'échappement (24) de s'ouvrir entièrement, pendant que le moteur Diesel fonctionne dans une plage spécifiée de vitesses et de charges réduites.

**6.** Système de commande pour un moteur Diesel, suivant la revendication 5, dans lequel le moyen de commande temporelle d'injection (35, 35a) fait avancer l'instant d'injection de carburant d'une avance qui est accrue avec une diminution de la levée du clapet dudit papillon d'admission des gaz (14).

**7.** Système de commande pour un moteur Diesel, suivant la revendication 1, dans lequel le moyen de commande temporelle d'injection (35, 35a) exécute ladite commande avancée du moment d'injection, lorsqu'on détecte que le moteur Diesel est entré dans une phase d'accélération, au moins lorsque le moteur Diesel fonctionne à un régime spécifique de vitesses réduites.

**8.** Système de commande pour un moteur Diesel, suivant la revendication 7, dans lequel le moyen de commande temporelle d'injection (35, 35a) fait avancer un instant d'injection de carburant, d'une avance qui est accrue, pendant que le moteur Diesel accélère dans ladite plage spécifiée de vitesses réduites par rapport au moment où il accélère dans une plage spécifiée de vitesses intermédiaires.

**9.** Système de commande pour un moteur Diesel, suivant la revendication 1 ou 2, dans lequel la valeur de consigne spécifiée du rapport air / carburant est déterminée de façon à réaliser un changement de progressif à rapide, d'une quantité de fumée dans un gaz d'échappement, causé par un changement de rapport air / carburant vers une zone riche.

**10.** Système de commande pour un moteur Diesel, suivant la revendication 1 ou 2, dans lequel le taux d'alimentation en carburant et la valeur de rapport air / carburant sont tracés respectivement, selon les conditions de fonctionnement du moteur.

**11.** Système de commande pour un moteur Diesel, suivant la revendication 1, dans lequel le moyen de commande temporelle d'injection (35, 35a) commence ladite commande avancée du moment d'injection, dès que l'on a détecté que le moteur Diesel est entré dans une phase d'accélération et termine cette commande avancée d'injection, lorsque la soupape de recyclage du gaz d'échappement (24) atteint une levée du clapet plus petite qu'une levée prédéterminée.

**12.** Système de commande pour un moteur Diesel, suivant la revendication 11, dans lequel le moyen de commande temporelle d'injection (35, 35a) fait avancer le moment d'injection d'une avance progressivement accrue, avec une diminution de la levée du clapet de ladite soupape de recyclage de gaz d'échappement (24).

**13.** Système de commande pour un moteur Diesel, suivant la revendication 1, dans lequel un papillon d'admission des gaz (14) est installé dans le passage d'admission (10), en amont d'un point où le gaz d'échappement est admis et commandé pour rester fermé d'une quantité prédéterminée, de façon à ce que le moyen de contrôle du recyclage de gaz d'échappement (35, 35b) empêche la soupape de recyclage de gaz d'échappement (24) de s'ouvrir entièrement, pendant que le moteur Diesel fonctionne à un régime spécifié de vitesses et de charges réduites, ledit moyen de contrôle de recyclage des gaz d'échappement (35, 35a) commande une levée de clapet de la soupape de recyclage de gaz d'échappement (24), pour modifier la quantité d'air frais introduit dans le passage d'admission (10), en amont d'un point où le gaz d'échappement est admis et une quantité d'injection de carburant qui est déterminée, en fonction des courses de l'accélérateur, de façon à faire coïncider le rapport air / carburant, avec une valeur spécifiée de consigne de rapport air / carburant et le moyen de commande temporelle d'injection (35, 35a) commence cette commande avancée du moment d'injection, dans lequel une avance du moment d'injection de carburant est accrue avec une diminution de la levée du clapet du papillon d'admission des gaz (14), dès que l'on a détecté que le moteur Diesel est entré dans une phase d'accélération et termine cette commande avancée du moment d'injection, après avoir poursuivi cette commande avancée du moment d'injection, jusqu'à l'expiration de ladite période initiale d'accélération prédéterminée, à partir du moment où on a détecté que le moteur Diesel est entré dans une phase d'accélération.

## Patentansprüche

1. Steuerungs- bzw. Regelungssystem für einen Dieselmotor, der ausgerüstet ist mit: einem Abgasrückführungsventil (24), das betriebsfähig ist, um eine Abgasmenge zu steuern bzw. regeln, die von einem Abgas- bzw. Auslaßkanal (20) zu einem Ansaug- bzw. Einlaßkanal (10) durch einen Abgasrückführungskanal (23) teilweise zurückgeführt wird, und mit Abgasrückführungssteuermitteln bzw. einer Abgasrückführungssteuer- bzw. -regeleinrichtung (35, 35b) für eine Rückkopplungssteuerung bzw. -regelung eines Ventilhubs bzw. - anhebens des Abgasrückführungsventils (24), um eine in den Ansaugkanal (10) eingeleitete Frischluftmenge entsprechend einer Änderung in der Abgasmenge zu ändern, die zu dem Ansaugkanal (10) zugeführt wird, um hierdurch ein Luft-zu-Kraftstoff-Verhältnis in Übereinstimmung mit einem spezifizierten Luft-zu-Kraftstoff-Zielverhältnis zu bringen, während der Dieselmotor in einem gewöhnlichen bzw. üblichen Betriebs- bzw. Antriebszustand ist,
**dadurch gekennzeichnet,**
**daß** die Abgasrückführungsregeleinrichtung (35, 35b) den Ventilhub des Abgasrückführungsventils (24) mit Rückkopplung regelt, um die Frischluftmenge so zu ändern, dass hierdurch das Luft-zu-Kraftstoff-Verhältnis in Übereinstimmung mit einem spezifizierten Luft-zu-Kraftstoff-Zielverhältnis für einen Beschleunigungsantriebszustand gebracht wird, das von dem spezifizierten Luft-zu-Kraftstoff-Zielverhältnis für den gewöhnlichen Antriebszustand verschieden ist, während der Dieselmotor in dem Beschleunigungsantriebszustand ist, in dem eine Kraftstoffeinspritzmenge erhöht ist, wobei das spezifizierte Luft-zu-Kraftstoff-Zielverhältnis für den Beschleunigungsantriebszustand magerer ist als das spezifizierte Luft-zu-Kraftstoff-Zielverhältnis für den gewöhnlichen Antriebszustand, während der Dieselmotor bei konstantem Beschleunigungs-Hub bzw. -Verlauf bzw. -Gasbedalbewegung und mit konstanter Motordrehzahl arbeitet, und dass ein Mittel bzw. eine Einrichtung zur Steuerung bzw. Regelung der Kraftstoffeinspritzeinstellung bzw. -verstellung bzw. -zeitgebungfeststellt, dass der Dieselmotor in den Beschleunigungsantriebszustand eintritt, ein Vorverlegen der Steuerung der Kraftstoffeinspritzeinstellung bzw. -verstellung ausführt, so dass die Kraftstoffeinspritzung, wenn festgestellt worden ist, dass der Dieselmotor in den Beschleunigungsantriebszustand eingetreten ist, während die Abgasmenge gesteuert bzw. geregelt wird, die teilweise zurückgeführt wird, früher beendet wird als ein Zeitpunkt unmittelbar vor der Feststellung, dass der Dieselmotor in den Beschleunigungsantriebszustand eingetreten ist, das Vorverlegen der Steuerung bzw. Regelung der Kraftstoffeinspritzeinstellung bzw. -verstellung bzw. -zeitgebung unmittelbar beginnt bzw. startet, wenn festgestellt wird, dass der Dieselmotor in den Beschleunigungsantriebszustand eingetreten ist, und eine Kraftstoffeinspritzeinstellung bzw. -verstellung bzw. -zeitgebungnur für eine vorbestimmte Anfangsperiode der Beschleunigung vorverlegt.

2. Steuerungs- bzw. Regelungssystem für einen Dieselmotor, wie in Anspruch 1 definiert, bei dem die Abgasrückführungsregeleinrichtung (35, 35b) einen Ventilhub des Abgasrückführungsventils (24) mit Rückkopplung regelt, um eine Menge von frischer Ansaugluft, die in den Ansaugkanal (10) stromaufwärts von einer Stelle, wo das Abgas zugeführt wird, eingeleitet wird, und eine Kraftstoffeinspritzmenge entsprechend den Beschleunigungsverläufen bzw. Gaspedalbewegung so zu ändern, dass ein Luft-zu-Kraftstoff-Verhältnis in Übereinstimmung mit einem spezifizierten Luft-zu-Kraftstoff-Zielverhältnis gebracht wird.

3. Steuerungs- bzw. Regelungssystem für einen Dieselmotor, wie in Anspruch 1 definiert, bei dem die Einrichtung (35, 35a) zur Steuerung bzw. Regelung der Kraftstoffeinspritzeinstellung bzw. -verstellung das Vorverlegen der Steuerung bzw. Regelung der Kraftstoffeinspritzeinstellung bzw. -verstellung bzw. - zeitgebung unmittelbar startet, wenn festgestellt wird, dass der Dieselmotor in den Beschleunigungsantriebszustand eingetreten ist, und das Vorverlegen der Steuerung bzw. Regelung der Kraftstoffeinspritzeinstellung bzw. -verstellung bzw. -zeitgebung nach Ablauf der vorbestimmten Anfangsperiode der Beschleunigung beendet, seitdem festgestellt wird, dass der Dieselmotor in den Beschleunigungsantriebszustand eingetreten ist.

4. Steuerungs- bzw. Regelungssystem für einen Dieselmotor, wie in Anspruch 3 definiert, bei dem die Einrichtung (35, 35a) zur Steuerung bzw. Regelung der Kraftstoffeinspritzeinstellung bzw. -verstellung bzw. -zeitgebung ein Vorverlegen der Kraftstoffeinspritzeinstellung bzw. -verstellung bzw. -zeitgebung entsprechend einem Zeitablauf allmählich bzw. graduell herabsetzt, seitdem festgestellt wird, dass der Dieselmotor in den Beschleunigungsantriebszustand eingetreten ist, um eine Abnahme bzw. Herabsetzung in dem Ventilhub des Abgasrückführungsventils zu gewähren bzw. zuzulassen.

5. Steuerungs- bzw. Regelungssystem für einen Dieselmotor, wie in Anspruch 1 definiert, bei dem ein Ansaugdrosselventil (14) in dem Ansaugkanal (10) stromaufwärts von einer Stelle, an der das Abgas zugeführt wird, eingebaut ist und gesteuert bzw. geregelt wird, um um ein vorbestimmtes Ausmaß bzw. einen vorbestimmten Betrag geschlossen zu bleiben, so dass die Abgasrückführungsregeleinrichtung (35, 35b) das Abgasrückführungsventil (24) aus einer vollständig offenen Position heraus hält, während der Dieselmotor in einem spezifizierten Bereich von niedrigeren Drehzahlen und niedrigeren Lasten arbeitet.

6. Steuerungs- bzw. Regelungssystem für einen Dieselmotor, wie in Anspruch 5 definiert, bei dem die Einrichtung (35, 35a) zur Steuerung bzw. Regelung der Kraftstoffeinspritzeinstellung bzw. -verstellung bzw. -zeitgebung eine Kraftstoffeinspritzeinstellung bzw. -verstellung bzw. -zeitgebung um eine Vorverlegung vorverlegt, die mit einer Abnahme bzw. Herabsetzung in dem Ventilhub des Ansaugdrosselventils (14) größer gemacht wird.

7. Steuerungs- bzw. Regelungssystem für einen Dieselmotor, wie in Anspruch 1 definiert, bei dem die Einrichtung (35, 35a) zur Steuerung bzw. Regelung der Kraftstoffeinspritzeinstellung bzw. -verstellung bzw. -zeitgebung das Vorverlegen der Steuerung bzw. Regelung der Kraftstoffeinspritzeinstellung bzw. - verstellung bzw. -zeitgebung, wenn festgestellt wird, dass der Dieselmotor in den Beschleunigungsantriebszustand eingetreten ist, zumindest dann ausführt, während der Dieselmotor in einem spezifizierten Bereich von niedrigeren Drehzahlen arbeitet.

8. Steuerungs- bzw. Regelungssystem für einen Dieselmotor, wie in Anspruch 7 definiert, bei dem die Einrichtung (35, 35a) zur Steuerung bzw. Regelung der Kraftstoffeinspritzeinstellung bzw. -verstellung bzw. -zeitgebung eine Kraftstoffeinspritzenstellung bzw. -verstellung bzw. -zeitgebung um eine Vorverlegung vorverlegt, die, während der Dieselmotor arbeitet, um in dem spezifizierten Bereich von niedrigeren Drehzahlen zu beschleunigen, größer ist als dann, während der Dieselmotor arbeitet, um in einem spezifizierten Bereich von mittleren Drehzahlen zu beschleunigen.

9. Steuerungs- bzw. Regelungssystem für einen Dieselmotor, wie in Anspruch 1 oder 2 definiert, bei dem das Luft-zu-Kraftstoff-Zielverhältnis so bestimmt wird, um eine allmähliche bis schnelle Änderung in einer Menge von Rauch in einem Abgas, verursacht durch eine Änderung im Luft-zu-Kraftstoff-Verhältnis in Richtung zu einer fetten bzw. reichen Seite, zu gewähren bzw. zuzulassen.

10. Steuerungs- bzw. Regelungssystem für einen Dieselmotor, wie in Anspruch 1 oder 2 definiert, bei dem die Kraftstoffeinspritzmenge und das Luft-zu-Kraftstoff-Zielverhältnis jeweils in Bezug auf Motorbetriebsbedingungen abgebildet bzw. dargestellt werden.

11. Steuerungs- bzw. Regelungssystem für einen Dieselmotor, wie in Anspruch 1 definiert, bei dem die Einrichtung (35, 35a) zur Steuerung bzw. Regelung der Kraftstoffeinspritzeinstellung bzw. -verstellung bzw. -zeitgebung das Vorverlegen der Steuerung bzw. Regelung der Kraftstoffeinspritzeinstellung bzw. - verstellung bzw. -zeitgebungunmittelbar startet, wenn festgestellt wird, dass der Dieselmotor in den Beschleunigungsantriebszustand eingetreten ist, und das Vorverlegen der Steuerung bzw. Regelung der Kraftstoffeinspritzeinstellung bzw. -verstellung bzw. -zeitgebungbeendet, wenn das Abgasrückführungsventil (24) einen Ventilhub geringer als ein vorbestimmter Ventilhub erreicht.

12. Steuerungs- bzw. Regelungssystem für einen Dieselmotor, wie in Anspruch 11 definiert, bei dem die Einrichtung (35, 35a) zur Steuerung bzw. Regelung der Kraftstoffeinspritzeinstellung bzw. -verstellung bzw. -zeitgebungeine Kraftstoffeinspritzeinstellung bzw. -verstellung bzw. -zeitgebungum eine Vorverlegung vorverlegt, die mit einer Abnahme bzw. Herabsetzung in dem Ventilhub des Abgasrückführungsventils (24) allmählich bzw. stufenweise bzw. graduell größer gemacht wird.

13. Steuerungs- bzw. Regelungssystem für einen Dieselmotor, wie in Anspruch 1 definiert, bei dem ein Ansaugdrosselventil (14) in dem Ansaugkanal (10) stromaufwärts von einer Stelle, an der das Abgas zugeführt wird, eingebaut ist und gesteuert bzw. geregelt wird, um um ein vorbestimmtes Ausmaß bzw. einen vorbestimmten Betrag geschlossen zu bleiben, so dass die Abgasrückführungsregeleinrichtung (35, 35b) das Abgasrückführungsventil (24) aus einer vollständig offenen Position heraus hält, während der Dieselmotor in einem spezifizierten Bereich von niedrigeren Drehzahlen und niedrigeren Lasten arbeitet, die Abgasrückführungssregeleinrichtung (35, 35a) einen Ventilhub des Abgasrückführungsventils (24) mit Rückkopplung regelt, um eine Menge von frischer Ansaugluft, die in den Ansaugkanal (10) stromaufwärts von einer Stelle eingeleitet wird, an der das Abgas zugeführt wird, und um eine Kraftstoffeinspritzmenge zu ändern, die entsprechend Beschleunigungsverläufen bzw. Gaspedalbewegung bestimmt wird, so dass ein Luft-zu-Kraftstoff-Verhältnis in Übereinstimmung mit einem spezifizierten Luft-zu-Kraftstoff-Zielverhältnis gebracht wird, und die Einrichtung (35, 35a) zur Steuerung bzw. Regelung der Kraftstoffeinspritzeinstellung bzw. -verstellung bzw. -zeitgebungdas Vorverlegen der Steuerung bzw. Regelung der Kraftstoffeinspritzeinstellung bzw. -verstellung, wobei eine Vorverlegung, um die eine Kraftstoffeinspritzeinstellung bzw. -verstellung bzw. - zeitgebungvorverlegt wird, mit einer Abnahme bzw. Herabsetzung in dem Ventilhub des Ansaugdrosselventils (14) größer gemacht wird, unmittelbar dann startet, wenn festgestellt wird, dass der Dieselmotor in den Beschleunigungsantriebszustand eingetreten ist, und das Vorverlegen der Steuerung bzw. Regelung der Kraftstoffeinspritzeinstellung bzw. -verstellung bzw. - zeitgebungnach Fortsetzen des Vorverlegens der Steuerung bzw. Regelung der Kraftstoffeinspritzeinstellung bzw. -verstellung bzw. -zeitgebungbis zum Ablauf der vorbestimmten Anfangsperiode der Beschleunigung beendet, seitdem festgestellt wird, dass der Dieselmotor in den Beschleunigungsantriebszustand eingetreten ist.

# FIG. 1

EP 0 987 425 B1

29 VACUUM SOURCE

16

31

32 ACCELERATOR PEDAL TRAVEL SWNSOR

27

28

24  26

15

14

6a    23

10m    6

10a   5   8

4

30   22

10

10c

1

3

2

7

20

20c

20m   21

13

12   11

25

35

ECU

35b EXHAUST GAS RECIRCULATION CONTROL

35e INJECTION TIMING ADVANCE CONTROL

35a FUEL INJECTION CONTROL

35c ACCELERATION JUDGEMENT

35d INTAKE AIR THROTTLE VALVE CONTROL

# FIG. 2A

EXHAUST GAS

# FIG. 2B

EXHAUST GAS

# FIG. 3

# FIG. 4A

# FIG. 4B

# FIG. 5

EP 0 987 425 B1

**COMMON-RAIL PRESSURE SENSOR** — 6a

**AIR FLOW SENSOR** — 11

**ACCELERATOR TRAVEL SENSOR** — 32

**ENGINE SPEED SENSOR** — 9

**INTAKE AIR PRESSURE SENSOR** — 10a

46 — $Trqsol$ / $CRPsol$ / $Ne$ — 50 — $CPRsol$ — **COMMON-RAIL PRESSURE CONTROL**

$CRP$

**FUEL INJECTION CONTROL** — $Fsol$

36 — $Acc$ / $Trqsol$ / $Ne$ — 41

$FAir$

$Trqsol$

37 — $Trqsol$ / $Fsol$ (SMALL)
$Trqsol$ / $Fsol$ (MIDDLE)
$Trqsol$ / $Fsol$ (LARGE) — 42

51 — $Fsol$ / $Bstsol$ / $Ne$ — 47 — $THsol$ — **INTAKE THROTTLE VALVE CONTROL**

$Fsol$

**TARGET AMOUNT OF FLESH INTAKE AIR CALCULATION** $A/Fsol \times Fsol$ — 44 — $FAsol$ — **FRESH AIR CONTROL** — 45

$FAir$

$EGRsol$

**EGR VALVE CONTROL**

38 — $Trqsol$ / $A/Fsol$ / $Ne$ — 43 — $A/Fsol$

52 — $Trqsol$ / $Bstsol$ / $Ne$ — 48 — $Bstsol$ — **SUPERCHARGE PRESSURE CONTROL** — 49

$Boost$

$VGTsol$ — **VGT CONTROL**

## FIG. 6

## FIG. 7

# FIG. 8

```
        ┌─────────────────┐
        │     START       │
        └─────────────────┘
                 │
                 ▼
        ┌─────────────────┐  S1
        │ DETERCTION OF Fair │
        └─────────────────┘
                 │
                 ▼
        ┌─────────────────┐  S2
        │ DETECTION OF CRANK ABGLE │
        └─────────────────┘
                 │
                 ▼
        ┌─────────────────┐  S3
        │ DETERMINATION OF Fair │
        └─────────────────┘
                 │
                 ▼
        ┌─────────────────┐  S4
        │ DETERMINATION OF Ne │
        └─────────────────┘
                 │
                 ▼
        ┌─────────────────┐  S5
        │ DETECTION OF Acc │
        └─────────────────┘
                 │
                 ▼
        ┌─────────────────┐  S6
        │ DETERMINATION OF Fsol │
        └─────────────────┘
                 │
                 ▼
  ACCELERATIVE  ◁──────  ACCELERATIVE DRIVE STATE ?  S7
       │                       │ ORDINARY
       ▼                       │
┌──────────────┐ S12           │
│ CONTROL OF TARGET │          │
│ A/F DETERMINATION │          │
│ FOR ACCELERATION  │          │
└──────────────┘               │
       │                       │
       ▼                       │
┌──────────────┐ S13           │
│ CONTROL OF EGR VALVE │       │
│ FOR ACCELERATION │           │
└──────────────┘               │
       │                       │
       ▼                       ▼
┌──────────────┐ S14   ┌──────────────┐ S8
│ CONTROL OF FUEL │     │ CONTROL OF TARGET │
│ INJECTION AMOUNT │    │ A/F DETERMINATION │
│ FOR ACCELERATION │    └──────────────┘
└──────────────┘               │
       │                       ▼
       │               ┌──────────────┐ S9
       │               │ CALCULATION OF TARGET │
       │               │ AMOUNT OF INTAKE AIR │
       │               └──────────────┘
       └──────────────────────▶│
                               ▼
                       ┌──────────────┐ S10
                       │ BASIC CONTROL OF EGR VALVE │
                       └──────────────┘
                               │
                               ▼
                       ┌──────────────┐ S11
                       │ CONTROL OF EGR VALVE │
                       │ BY CYLINDER │
                       └──────────────┘
                               │
                               ▼
                       ┌─────────────┐
                       │     END     │
                       └─────────────┘
```

FIG. 9

# FIG. 11

# FIG. 13

# FIG. 10A

```
                    ┌─────────────┐
                    │    START    │
                    └─────────────┘
                           │
                           ▼                          S101
        ╱──────────────────────────────────╲  NO
       ╱  IS CRANK ANGLE EQUAL TO            ╲────────────┐
       ╲  LAST CRANK ANGLE + 180CA ?         ╱            │
        ╲──────────────────────────────────╱             │
                    │ YES                                 │
                    │                          S102       │
                    │            ┌──────────────────────┐ │
                    │            │   INTEGRATION OF Q    │ │
                    │            └──────────────────────┘ │
                    │                      │              │
                    │                      │   S103       │
                    │            ┌──────────────────────┐ │
                    │            │  COUNT CRANK TIME T   │ │
                    │            └──────────────────────┘ │
                    │                      │              │
                    │                      └──────────────┘
                    ▼                          S104
        ┌──────────────────────────────────┐
        │   i = i + 1, If i > 3 then i = 0  │
        └──────────────────────────────────┘
                    │                          S105
        ┌──────────────────────────────────┐
        │        Q(i)  = INTEGRATED Q       │
        └──────────────────────────────────┘
                    │                          S106
        ┌──────────────────────────────────┐
        │            T(i)  = T              │
        └──────────────────────────────────┘
                    │                          S107
        ┌──────────────────────────────────┐
        │         Qav  = ΣQ(i) / 4          │
        └──────────────────────────────────┘
                    │                          S108
        ┌──────────────────────────────────┐
        │       ΔQ(i)  = Q(i) / Q(i - 1)    │
        └──────────────────────────────────┘
                    │                          S109
        ┌──────────────────────────────────┐
        │       ΔT(i)  = T(i) / T(i - 1)    │
        └──────────────────────────────────┘
                    │                          S110
        ┌──────────────────────────────────┐
        │       ΔQt(i)  =  ΔQ(i) / ΔT(i)    │
        └──────────────────────────────────┘
                    │                          S111
        ┌──────────────────────────────────┐
        │ ΔQt'(i) = ΔQt(i) × γ + ΔQt'(i) × (1 - γ) │
        │            0 < γ ≦ 1              │
        └──────────────────────────────────┘
                    │
                    ▼
                  ( 1 )
```

## FIG. 10B

```
        ( 1 )
          │
          ▼
┌─────────────────────────┐  S112
│    DETECTION OF Acc      │
└─────────────────────────┘
          │
          ▼
┌─────────────────────────┐  S113
│   DETERMINATION OF F     │
└─────────────────────────┘
          │
          ▼
┌─────────────────────────┐  S114
│   ΔAcc = Acc - Acc'      │
└─────────────────────────┘
          │
          ▼
┌─────────────────────────┐  S115
│  DETERMINATION OF αcc.   │
└─────────────────────────┘
          │
          ▼
┌─────────────────────────┐  S116
│     α = ΔAcc / αcc       │
└─────────────────────────┘
          │
          ▼                    S117
    ╱──────────────╲  YES
   ⟨    α > 1 ?     ⟩─── ACCELERATIVE ───┐
    ╲──────────────╱                      │
  ORDINARY │ NO                           ▼
          │                    ┌──────────────────────────┐  S118
          │                    │ DETERMINATION OF KTegr   │
          │◄───────────────────┴──────────────────────────┘
          ▼
┌─────────────────────────┐  S119
│       ΔF = F / F'        │
└─────────────────────────┘
          │
          ▼
┌─────────────────────────┐  S120
│   DETERMINATION OF FK    │
└─────────────────────────┘
          │
          ▼
┌─────────────────────────┐  S121
│      β = ΔF / Fk         │
└─────────────────────────┘
          │
          ▼                    S122
    ╱──────────────╲  YES
   ⟨    β > 1 ?     ⟩─── ACCELERATIVE ───┐
    ╲──────────────╱                      │
  ORDINARY │ NO                           ▼
          ▼                            ( 3 )
        ( 2 )
```

$\Delta Acc = Acc - Acc'$

$\alpha = \Delta Acc / \alpha cc$

$\alpha > 1 ?$

$\Delta F = F / F'$

$\beta = \Delta F / Fk$

$\beta > 1 ?$

34

# FIG. 10C

```
                    ( 2 )
                      │
                      ▼
        ┌──────────────────────────────┐  S123
        │  DETERMINATION OF  Ttrq       │
        └──────────────────────────────┘
                      │
                      ▼
        ┌──────────────────────────────┐  S124
        │  DETERMINATION OF  A/F        │
        └──────────────────────────────┘
                      │
                      ▼
        ┌──────────────────────────────┐  S125
        │        Q  =  A/F  x  F        │
        └──────────────────────────────┘
                      │
   ( 5 )─────────────►│
                      ▼
        ┌──────────────────────────────┐  S126
        │      Qerr  =  TQ  -  Qav      │
        └──────────────────────────────┘
                      │
                      ▼
        ┌──────────────────────────────┐  S127
        │   CALCULATION OF  Tegr        │
        │     BY PID CONTROL            │
        └──────────────────────────────┘
                      │
                      ▼                        S128
        ⟨ |ΔAcc < Thacc| ; F > 0 ?  ⟩  NO
        ⟨  MORE THAN n TIMES        ⟩──────► ACCELERATIVE
              ORDINARY │ YES
                      ▼                        S129
        ⟨ ΔTegr(i) = ΔQt'(i)  x  E(i) + ΔTegr'(i) ⟩
                      │
                      ▼                S130
             ⟨   i = 3 ?   ⟩  NO
                      │ YES
                      ▼
        ┌──────────────────────────────┐  S131
        │  ΔTegr-av  =  ΣΔTegr(i) / 4   │
        │  ΔTegr(i)  =  ΔTegr-av        │
        └──────────────────────────────┘
                      │
                      ▼
        ┌──────────────────────────────┐  S132
        │  ΔTegr(i)  =  Tegr + ΔTegr(i) │
        └──────────────────────────────┘
                      │
                      ▼
                    ( 4 )
```

$|\Delta Acc < Thacc| ; F > 0 ?$ MORE THAN $n$ TIMES

$\Delta Tegr(i) = \Delta Qt'(i) \times E(i) + \Delta Tegr'(i)$

$i = 3 ?$

$\Delta Tegr\text{-}av = \Sigma \Delta Tegr(i) / 4$

$\Delta Tegr(i) = \Delta Tegr\text{-}av$

$\Delta Tegr(i) = Tegr + \Delta Tegr(i)$

# FIG. 10D

S133 Tegr < EGR0 ? NO

YES

S134 DETECTION OF EGRlift

S135 NO EGRlift > EGRV0 ? 

YES

S136 DRIVE EGR VALVE

RETURN

# FIG. 10E

```
        ( 3 )
          |
          v
```

| | |
|---|---|
| DETERMINATION OF *KTA/F* | S137 |

```
          |
          v
```

| | |
|---|---|
| $TQ = KTA/F \times F$ | S138 |

```
          |
          v
```

| | |
|---|---|
| DETERMINATION OF *LimitA/F* | S139 |

```
          |
          v
```

| | |
|---|---|
| $FLIMIT = Q(i) / LimitA/F$ | S140 |

```
          |
          v
```

| | |
|---|---|
| $TTF = \min(F, Flimit, Fmax)$ | S141 |

```
          |
          v
        ( 5 )
```

EP 0 987 425 B1

# FIG. 12A

```
                          START

                  S201
          DETECTION OF Acc

                  S202
          DETECTION OF Ne

                  S203
          DETERMINATION OF F

                               S204
  YES   IS ACCELERATOR PEDAL
        RETURNED ?
                     NO
S205                         S207
 Flag ← 1            Flag = 1 ?         NO

S206                     YES
 Tup = 0                       S208
                     Tup = Tup + Δt

                               S209
  NO      Tup < Tup₁ ?

                     YES
                               S210
                     γ = γ₁ ?

S211                                    S212
 Flag ← 0                      γ = γ₂ ?

                      6
```

# FIG. 12B

EP 0 987 425 B1

## FIG. 14

THROTTLE AMOUNT: SMALL
OF INTAKE AIR

AMOUNT OF FUEL INJECTION (F) / LARGE

ENGINE SPEED (Ne)

## FIG. 16

INJECTION TIMING
ADVANCE SIDE

K

T

AMOUNT OF FUEL INJECTION (F) / LARGE

ENGINE SPEED (Ne)

# FIG. 15A

```
                    START

                       │
                       ▼
            DETECTION OF Acc          S301
                       │
                       ▼
            DETECTION OF Ne           S302
                       │
                       ▼
            DETERMINATION OF F        S303
                       │
                       ▼
            DETERMINATION OF ITbase   S304
                       │
                       ▼                S305
            <  ACCELERATION ?  >─────────────┐
                       │                     │
                       ▼                     ▼
              ADFlag ←── 1    S306         ( 7 )
                       │
                       ▼
              ADTup = 0       S307
                       │
                       ▼
            DETERMINATION OF ITadv    S308
                       │
                       ▼
              ITadv* = ITadv  S309
                       │
                       ▼◄──────────────── ( 8 )
            ITs = ITbase + ITadv*      S310
                       │
                       ▼
            FUEL INJECTION            S311
                       │
                       ▼
                    RETURN
```

# FIG. 15B

⑦

S312

⟨ ADFlag = 1 ? ⟩ —NO

YES

S313

ADTup = ADTup + Δt

S314

⟨ ADTup < ADTup₁ ? ⟩

S316

ADFlag ⟵ 0

S315

ITadv* = {(ADTup₁ + ADTup) / ADTup₁} x ITadv

S317

ITadv* = 0

⑧

# FIG. 17

FIG. 18A

LARGE
ACCELERATOR PEDAL TRAVEL
t1
t

FIG. 18B

LARGE
AMOUNT OF FUEL INJECTION
t1
t

FIG. 18C

HIGH
ENGINE SPEED
t1
t

FIG. 18D

ADVANCING SIDE
BASIC FUEL INJECTION TIMING
t1
t

FIG. 18E

LARGE
ADVANCE VALUE
t1
t

FIG. 18F

ADVANCING SIDE
FUEL INJECTION TIMING
t1
t

FIG. 18G

LARGE
EGR VALVE LIFT
t1
t

FIG. 19A

FIG. 19B

FIG. 19C

# FIG. 20

# FIG. 21

# FIG. 22

# FIG. 23

```
                    ( 7 )
                      │
                      │                    SV312
                      ▼                   /
        ┌────────────────────────────┐  NO
        〈   ADFlag   =   1 ?          〉─────────────────────┐
        └────────────────────────────┘                      │
                      │ YES            SV313                  │
                      ▼               /                       │
        〈 IS EGR VALVE FULLY OPEN ? 〉 YES                   │
                      │               └──────────┐           │
                      │ NO                        │           │
                      │                           │  SV315    │
                      │                           ▼ /         │
                      │               ┌────────────────────┐  │
                      │               │   ADFlag  ◄──  0    │  │
                      │               └────────────────────┘  │
          SV314       │                           │           │
         /            │                           │◄──────────┘
        ┌─────────────┴────┐                      │
        │  ITadv* ◄── ITadv │                      │  SV316
        └──────────────────┘                      ▼ /
                      │                ┌────────────────────┐
                      │                │   ITadv*  =   0     │
                      │                └────────────────────┘
                      │                           │
                      │◄──────────────────────────┘
                      ▼
                    ( 8 )
```

## FIG. 24

## FIG. 25